# EUROPEAN PATENT SPECIFICATION

(11) **EP 4 427 176 B1**
(45) Date of publication and mention of the grant of the patent: **18.06.2025**
(21) Application number: 22813282.5
(22) Date of filing: 07.11.2022
(51) Int. Cl.: G06Q 10/0635, G06Q 40/08, G06Q 10/10, G06Q 50/16

(54) **AUTOMATED STANDARDIZED LOCATION DIGITAL TWIN AND LOCATION DIGITAL TWIN METHOD FACTORING IN DYNAMIC DATA AT DIFFERENT CONSTRUCTION LEVELS, AND SYSTEM THEREOF**
AUTOMATISIERTES STANDARDISIERTES DIGITALES STANDORT-ZWILLING UND STANDORT-DIGITAL-TWIN-VERFAHREN MIT FAKTORISIERUNG IN DYNAMISCHEN DATEN AUF VERSCHIEDENEN KONSTRUKTIONSEBENEN UND SYSTEM DAFÜR
JUMEAU NUMÉRIQUE DE LOCALISATION AUTOMATISÉE ET NORMALISÉE ET PROCÉDÉ DE JUMEAU NUMÉRIQUE DE LOCALISATION TENANT COMPTE DES DONNÉES DYNAMIQUES À DIFFÉRENTS NIVEAUX DE CONSTRUCTION, ET SYSTÈME ASSOCIÉ

(30) Priority: 05.11.2021 CH 0705152021
(43) Date of publication of application: 11.09.2024
(73) Proprietor: Swiss Reinsurance Company Ltd., 8022 Zürich (CH)
(72) Inventor: BRANDL, Philip, 63303 Dreieich (DE)
(74) Representative: Leimgruber, Fabian Alfred Rupert
(86) International application number: PCT/EP2022/080976
(87) International publication number: WO 2023/079139

(56) References cited:
- US-A1- 2014 019 166
- US-A1- 2018 165 616
- US-A1- 2020 050 647
- US-A1- 2020 387 528
- US-A1- 2021 295 446
- BRUNNER D ET AL: "Distributed Geospatial Data Processing Functionality to Support Collaborative and Rapid Emergency Response", IEEE JOURNAL OF SELECTED TOPICS IN APPLIED EARTH OBSERVATIONS AND REMOTE SENSING, IEEE, USA, vol. 2, no. 1, 1 March 2009 (2009-03-01), pages 33 - 46, XP011280842, ISSN: 1939-1404, DOI: 10.1109/JSTARS.2009.2015770
- LOEFFLER PETER: "Buildings with a digital twin have a lot to tell us", INTERNET ARTICLE, 20 April 2021 (2021-04-20), pages 1 - 3, XP093019492, Retrieved from the Internet <URL:https://workplaceinsight.net/buildings-with-a-digital-twin-have-a-lot-to-tell-us/> [retrieved on 20230131]

## Description

### Field of the Invention

The present invention relates to the technical field of cyber-physical integration of complex constructions, in particular, with construction-related complex environmental interaction. Further, it relates to intelligent automated manufacturing and factoring systems providing standardized factoring in dynamic location- and/or construction dependent data, in particular, factoring in standardized location digital twin data formats, not relying on the prior art digital twin design and construction mapping iterative methods excluding intelligent integrated and automated development methods. The present invention also relates to systems based on intelligent or smart technology intended to graphically facilitate interaction between physical and the cyber worlds, in particular digital twin technologies in order to achieve smart monitoring, steering, or predicting present or future states of a physical object, as edifices, building constructions or property assets. All such systems try to cope with the challenges to connect the physical and cyber world to work intelligently, which defines the digital twin (DT) technology. More particularly, the present invention relates to a method and a digital platform for automated risk measuring for a physical constructions and/or property asset based on image data of an area including the property asset. Particularly the present invention relates to a method and a digital platform for automated graphical-based generation, processing and standardized factoring of physical risk-related parameters extracted from image data, geo location parameters and measurement-based risk relevant data for the construction and/or location.

### Background of the Invention

Digital Twins are a key component in today's technology in almost all technical fields. However, in the process of developing digital twin enabling technologies, a lack of reference to standards related to digital twin architecture and modeling leads to difficulty in realizing interconnection of data, modeling, and services between different enterprises or/or technical fields. Therefore, digital twin, by its nature of interoperability between multiple domains, requires standardization as a basis for implementation. The present invention allows to overcome these problems by providing an automated standardized location digital twin generation method and method for factoring in dynamic data at different construction levels by means of the generated location digital twin. The present invention is based on digital twin technology based on a new technical approach using polygon-based, digital twin multi-dimension modeling providing a new level of digital twin standardization. In the prior art, digital twins systems often comprise or are based on IoT (Internet of Things) interaction comprising storage, processing, and sharing of data within this architectural tier. IoT based digital twins do not allow for flexible and/or standardized and/or dynamic and/or user-friendly graphical configurations of data processing, applications, and data storage.

Further, often digital twins are used in the context of Industrial 4.0 technologies to achieve smart manufacturing, monitoring, steering and/or controlling of physical objects. One of the challenges is to connect the physical and cyber world to machine-based intelligently. The normal technical approach is to map the physical object to a digital counter-part, the latter being known as digital twin (DT). DT technology can be said to cover three components: knowledge content, effect and functionality, and application domain. However, prior art systems typically lack the awareness of its progress from the three aspects. To fully utilize DT technology, the relations of the three components (i.e., content, effect, and application) should be recognized in order to fill the gaps and defeats remaining. Further, DT-technology fails to form a comprehensively connected technology, which is an often phenomenon for a technology that remains in its early stage of development.

The autonomy and self-organizing properties of DT substantially changes the technical control and management of physical objects, such as assets, vehicles, or manufacturing systems etc.. A machine can achieve self-optimization when it can work independently, collect data, conduct analysis, negotiate with other machines, and provide suggestions. In addition, machines can communicate with humans and other machines. Smart homes, smart vehicles, or smart factories can also develop by employing DT that updates data and offers instruction for physical process. Through the virtual and physical integration of DTs, DT can be widely used in many industries, such as to analyze the life of the aircraft, to drive product design, manufacturing control and service operations.

Digital twins contain static and dynamic information, i.e. data and parameter values having a time dependence, and which can be represented e.g. by time-series of operational, physical and/or contextual parameter values. Thus, the static information includes geometric sizes, lists of materials, and procedures, whereas the dynamic information includes information on the structure/object/product/process life cycle that changes over time. DT is not a complete model of a physical object but a series of digital data and simulated models with different purposes. Specifically, DT represents a software structure that constructs physical systems. It obtains data from sensors, understands the system status, and responds to dynamic environmental changes. Moreover, DT provides intelligence at different levels to achieve the goal of smart manufacturing, smart controlling, smart steering, smart monitoring etc.. The realization of DT consists of a physical structure (classification, composition units, and network structures), conditions or statuses (locations, temperatures, and pressures), situational context information (events in chronological order), and analysis engines (algorithms, deductions, and inference rules).

In the prior art, there are different DT definitions for DT, digital shadow, and digital model. Herein, the following definitions is used: (1) Digital twin: a two-way data flow exists between the status of the physical object and the digital object for total integration; (2) Digital shadow: a one-way automatic data flow exists between the state of the existing physical object and the digital counterpart; and (3) Digital model: no automatic data exchange of any form exists between the digital model and the physical object; the digital model is a digital representation of the physical object.

Further, in the technology, it is often desirable to make assessment and/or predictions regarding the operation or future state of a real world physical system/object, such as a physical asset, a construction, an electro-mechanical system or the like. For example, it may be helpful to predict a Remaining Useful Life ("RUL") of an object, e.g. an electro-mechanical or a construction system, such as an air-craft engine or a building, to help plan when the system should be replaced, revised, or reconstructed. Likewise, an owner or operator of a system might want to monitor a condition of the system, or a portion of the system, to help make maintenance decisions, budget predictions, etc. Even with improvements in sensor and computer technologies, however, accurately making such assessments and/or predictions can be a difficult task. For example, an event that occurs while a system is not operating might impact the RUL and/or condition of the system but not be taken into account by typical approaches to system assessment and/or prediction processes.

Thus, in summary, there is a need for a standardized digital system based on location-dependent digital twin technology allowing to interconnect the various digital twin applications and systems known in the prior art and to cope with the challenges to mutually connect the physical and cyber world to work intelligently, which defines the digital twin (DT) technology. Further, it would be desirable to provide systems and methods, in particular standardized usable systems and methods, to facilitate assessments and/or predictions for a physical system in an automatic and technically accurate manner.

The above said is especially true for property assets and other realties assets in the context of automated risk transfer and exposure cover, still lacking a reliable, comparable, and scalable use of case related data. The largest inefficiency is a lack of a standardized data collection method for risk aspects of evaluated and managed assets. Although field engineers collect hundreds of relevant data-points (rdp's) while visiting a location, data processing still is a highly manual and a text-heavy chore. Incumbents who have entered the digital era have handed-out tablets to their field staff. This already started around 2005-2010. Even a decade later, no real disruption has occurred.

In many technical fields the use of virtual digital twins started to facilitate the maintenance and monitoring of complex real-world facilities, constructions, and systems. The digital twin serves as the digital counterpart of the monitored structure and reflects the system-relevant features as a digital copy. For example, US 2017/0286572 A1 shows a system using a digital twin of a twinned physical system linked with sensors to sense values of one or more designated parameters of the twinned physical system. The system receives data associated with the sensors and, for at least a selected portion of the twinned physical system, monitor a condition of the selected portion of the twinned physical system and/or assess a remaining useful life of the selected portion based at least in part on the sensed values of the one or more designated parameters.

An application for a digital twin system is for example presented in US 2016/333854 A1 for managing a wind farm having a plurality of wind turbines. A system with a digital twin interface includes a graphical user interface (GUI) displaying a digital equivalent of the wind farm. For example, the digital equivalent includes environmental information and a digital representation of each of the wind turbines arranged in the wind farm. The interface also includes a control icon arranged with each of the digital representations of the wind turbines.

In the field of community and environmental planning digital geographic information systems (GIS) have become popular. GIS is a computer system that analyzes and displays geographically referenced information. It uses geographic data that is attached to a unique location. This led to the rise of geospatial digital twins including information about the geographic location and the object of interest. Where a digital twin is a virtual mirror of a real-world facility, construction, or system, adding GIS brings quantifiable geographic elements into the fold. For example, the digital twin of a structure is not just displaying a floor plan; it reflects the floor plan in context with the geographic measurements of the space.

However, the core of the problem of lacking a standardized data evaluation method for managing, evaluating, and administering property assets remains the upstream data-processing. Even when the tedious task of transferring hand-written text into a risk engineering data-base is finished, or could partially be replaced by additional computerized systems most if not all incumbents still struggle with the complexity of data and the core dilemma of automation vs data-integrity - as field engineers make distinct decisions when interpreting collected data or selecting provided measures, the level of uncertainty and dependency on human error outgrow the trust in the process. This is evident by most incumbents limiting the level of fullautomation to small-size locations only - if at all.

When developing a data-based standard a showstopper typically is the high degree of hierarchy needed to cluster and structure the collected or available data, like account data, location data, location fire complex data, location building data, location area within a building data, location floor level of an aera within a building within a location data, etc.

Even worse, although data is enriched and structured, this process is still mostly done in-house for own underwriting purposes and for individual small-scale projects, but little is used for benchmarking or overarching information accessibility. The lack of a standardized data-format also creates enormous inefficiencies internally at the users as the various functions (i. e. procurement, controlling, asset management, financial office, enterprise risk management, etc.) lack an end-to-end data exchange format and the manual emailing of xlsx-spread-sheets and even the manual transfer of data-points is still normal practice.

For example, in the insurance sector it is reported that preparing each year for a property renewal takes weeks or even months of preparation, collecting data from various business units, individual locations, and other departments within a corporate entity. Brokers or other partners (surveyors, etc.) then further enrich the data, and appraisal companies are paid to help verify the accuracy of reported insured values. Submissions are then sent to multiple insurance carriers, who all independently encode and further enrich the datasets. No structured data flows back into the process, closing the loop. The next renewal sometimes appears like a "start-from-scratch" as it is not uncommon that a new location-set is created as the unstandardized new asset list is incompatible with the ones from prior years. This creates downstream problems such as duplicate locations. Risk Engineers, surveyors and loss adjusters still use address-based lists as the commonly accepted data "standard". Duplication, wrong location selection, or cumbersome location descriptions by using words are still very common. Data quality and wrong geo-encoding are still widely spread.

In the prior art, the document US 2018/0165616 A1 discloses a system for simulation of water events including flood modeling. The system generates modeling of water events based on multiple outputs from different modeling processes. The modeling process is based on raw data captured by a digital base data collector, a water flow data provider, a water surface elevation data provider, and a water model digitizer. The water surface elevation data are provided by a barometric module, an elevation calculator, and a calibration module. By means of a threshold events module comprising a first impacting modeler, and a last impacting modeler, a rating curve, a risk, and premium value is generated for providing rating risk and risk-transfer premium parameter values. For modeling water events at a given location mid in a timely fashion, the system aggregates the input data including water events' extent, flooded areas, flood plain, inundated areas, and measurement of water condition. The input datasets can also include other data, such as, terrain elevation data, land use land cover data, soil conductivity, water gauge measurements, and hydrologic regression equations for calculating flows. The inputs are processed by hydrologic modeling algorithms, hydraulic modeling algorithms, geospatial algorithms, and local or remote data of real-time water conditions depending on their requirements. US 2021/0295446 A1 discloses a system for automated prediction of impact measures based on occurrences of physical events. The occurrences of the physical events are detected by sensors based on predefined event parameters, impacts of the physical events on a physical object based on impact parameters are measured. Characteristics of the physical object are captured dynamically based on characteristics parameters. Further, the system generates a rate value based on the event parameters and the characteristics parameters, and forecasts dynamically forward-and-backward-looking impact measures based on at least one of (i) a variation of the rate value and (ii) the portfolio including a plurality of risk-transfer records. US 2020/0050647 A1 discloses an interactive geographic information systems (GIS). A markup language is used to facilitate communication between servers and clients of the interactive GIS, which enables a number of GIS features, such as network links (time-based and/or viewdependent dynamic data layers), ground overlays, screen overlays, placemarks, 3D models, and stylized GIS elements, such as geometry, icons, description balloons, polygons, and labels in the viewer by which the user sees the target area. Also, "virtual tours" of user-defined paths in the context of distributed geospatial visualization is provided. Streaming and interactive visualization of filled polygon data are used to allow buildings and other such features to be provided in 3D. US 2020/0387528 A1 discloses a system with an integrated centralized property database including a plurality of data objects associated with geographic location identifier(s) indicating a geographic point and associated with time identifier(s) indicative of a time history of an associated data objects regarding the associated geographic point. A user can transmit a request based on a query of a geographic location and time information and retrieve, from the property database, data objects having associated geographic location identifiers matching the received geographic location and having associated time identifiers matching the received time information. US 2014/0019166 A1 shows a system for spectral image classification of rooftop conditions. The system applies high reso-lution spectral imaging (hyperspectral or multispectral) to property characterization, specifically rooftop classification of type and condition using reference data. The system is able to classify the condition of vegetation and property hazards. By comparing the spatially subset spectral reflection of rooftops to a reference spectrum, the rooftop type and condition is assessed. The aerial inspection allows to produce uniform data for different uses. The cost of residential property inspections and re-inspections performed via manual visual inspection is reduced. The document Brunner D. et al. "Distributed Geospatial Data Processing Functionality to Support Collaborative and Rapid Emergency Response", IEEE Journal of Selected Topics in Applied Earth Observations and Remote Sensing, vol. 2, no. 1, March 2009, pp33-46 discloses a system for integrating high-resolution earth observation imagery into the operational workflow of geospatial data processing for emergency response actions. The core concept is the implementation of an image pyramid structure that allows each image tile to be addressed separately. Geospatial feature are collated data from distributed sources and integrated in visualization and image processing. The system components enable collaborative mapping, support for in situ data collection, customized on-demand image processing, and geospatial data queries and near instantaneous map visualization. Finally, the document Loeffler P. "Buildings with a digital twin have a lot to tell us", Internet Article, April 2021, pp 1-3 URL:https://workplaceinsight.net/buildings-with-a-digital-twin-have-a-lot-to-tell-us points to the possibility that digital twins can be created for buildings. Across the entire lifecycle of structures such as office buildings, hospitals, airports, and hotels, creating a digital twin can significantly reduce costs, improve efficiencies, speed construction delivery, as well as enhance performance and the user experience. Without disclosing technical details that document points out that digital twins may be used to capture static data about a building, such as the size of the floor plate, number of rooms, windows, wiring, technologies installed across the building, and construction materials used. According to the document, building design can be tweaked to include aspects such as evacuation planning, projected energy use and room layouts through visualizations and simulations.

### Summary of the Invention

It is an object of the invention to provide systems and methods, in particular, standardized usable systems and methods, to facilitate assessments and/or predictions for a physical system in an automatic and technically accurate manner. Further, the lack of a standardized data collection method for risk aspects of risk-exposed assets (i.e. assets or objects having a measurable probability of having a damage impact by the occurrence of a defined physical event, as a natural catastrophic event, as for example occurring flood events, earthquakes, storms, hurricanes, fire events etc. or accident events or if the object is a living object an illness etc.) is one of the largest inefficiencies and thus puts one of the larges technical challenges, the risk-transfer technology faces. Thus, it is a further object of the invention to provide a data-based standard system and method able to cope with the high degree of hierarchy needed to cluster and structure collected data comprising: (i) account data, (ii) location data, (iii) location fire complex data, (iii) location building data, (iv) location area within a building data, (v) location floor level of an aera within a building within a location data, etc. Another major object of the present invention is to provide a digital platform relying on a *"data-standard"* for risk asset data. Once created, the digital twin remains the same over the lifetime of the real physical location, even beyond change of ownership, activity, etc. The digital platform should be directed to provide a new technical way of content provision, risk understanding / knowledge and mitigation and exposure quantification as well as risk communication, while having overlaps to fields such as digital programming and architecture development, automated client management, automated business plan development, automated contract negotiating. Finally, it is an object of the present invention to provide a method and a digital platform for automated risk analysis for a physical property asset that technically simplify the required data processing and the required HMI (Human Machine Interaction) interaction, provide easy access to technically measurable risk related data, assist in standardizing the risk analysis, improve scalability of the analysis process, and provide a reliable long-term risk information about a property asset of interest. In particular it is an object of the present invention to provide a method and a digital platform for automated risk analysis that reduce complexity of measurement-based risk relevant data analysis, streamline the analysis automation process and augment data-integrity during the analysis.

According to the present invention, these objects are achieved particularly through the features of the independent claims. In addition, further advantageous embodiments follow from the dependent claims and the description.

According to the present invention, the above-mentioned objects are achieved by the method and system for automated standardized location digital twins of physical constructions factoring in dynamic data and measuring parameters at different construction levels and generating standardized geo-encoding output, the dynamic data and measuring parameters at least comprise aerial digital imagery of a geographic area, geo location parameter values for locations in the geographic area and/or construction parameter values and/or measurement-based exposure parameter values and/or protection parameter values, comprising (i) capturing and displaying a digital imagery of a geographic area including a location of a physical construction of interest on a display of a user interface, (ii) identifying a sub-area by indicating the construction identification by setting polygon-shaped boundaries around the physical construction at the geographic area to generate a digital 2-dimensional construction lay-out on the digital imagery, (iii) merging the digital imagery of the geographic area with a 2-dimensional geographic or topographic digital event foot print of a selected natural catastrophic event, (iv) assembling the digital 2-dimensional construction lay-out by graphically assigning hierarchic-structured levels comprising at least complexes and/or buildings and/or compartments via the graphical user interface, (v) extending the digital 2-dimensional construction lay-out by graphically assigning at least physical construction characteristic parameters and/or fire protection parameters and/or fire detection parameters and/or water source parameters and/or hazard control and protection parameters, and (vi) generating a location digital twin based on the digital imagery and the combined digital 2-dimensional construction having a standardized output for the construction based on the dynamic data and measuring parameter values. The construction can e.g. be a physical property asset, like for example real estate, civil engineering constructions, industrial facilities, etc., which is based on image data of a geographic area, geo location parameters for locations in the geographic area and measurement-based risk relevant data for locations in the geographic area. An image of a geographic area including a location of a physical property asset of interest is retrieved and displayed on a display of a user interface. A user selects a sub-area by indicating a property asset identification or by setting boundaries around the physical property asset at the location of interest using the user interface. For example, the user spans a rectangle, polygon, or circle over the location of interest using a touch pad or computer mouse. Also, the user can upload property asset identification data, for example an address or GPS data, which identifies the sub area. Geo location parameters of the sub-area and measurement-based risk relevant data for the sub-area are combined as asset risk parameters for the physical property asset. The image data of the geographic area, the geo location parameters for locations in the geographic area and the measurement-based risk relevant data for locations in the geographic area can for example be provided by a data base, a cloud based data platform and/or from an external data processing tool for example by an application programming interface. A processing circuitry generates a location digital twin of the physical property asset indicating the image of the geographic area, the sub-area boundaries and the asset risk parameters. With the present system, inter alia, relying on the sensors, communications, and computational simulation and/or modeling, it is possible to consider multiple components of a system, each having its own micro-characteristics and not just average measures of a plurality of components associated with a production run or lot. Moreover, it may be possible to very accurately monitor and continually assess the health of individual components, predict their remaining lives and the behavior under impacting strength of an occurring damage event. This allows a significant advance for applied prognostics and discovering a system and methodology to do so in an accurate and efficient manner will help reduce unplanned down time for complex systems (resulting in cost savings and increased operational efficiency). It may also be possible to achieve a more nearly optimal control of an asset if the life of the parts can be accurately determined as well as any degradation of the key components. According to some embodiments described herein, this information may be provided by a "digital twin" of a twinned physical system.

A digital platform for automated risk analysis for a physical property asset according to the invention, wherein the analysis is based on image data of a geographic area, geo location parameters for locations in the geographic area and measurement-based risk relevant data for locations in the geographic area, provides a framework structure which maintains a plurality of location digital twins of a plurality of physical property assets. Based on the method described above, a processing circuitry of the digital platform is configured to generate the location digital twins based on image data of the geographic areas, the sub-areas including a physical property asset of interest, geo location parameters and the measurement-based risk relevant data of the property asset of interest in the sub area. The generated location digital twins are provided to the framework structure and serve as a basis for the risk analysis.

In summary the method and the digital platform for automated risk analysis for physical property assets provides a standardized location risk profile for property assets in form of the digital twin. The digital twin serves as a standardized data-format providing basic asset risk parameters about property assets of interest that are otherwise spread out over various sources using different formats or need to be captured before the start of a risk analysis. The digital platform allows for simple access to the digital twins of the property assets for various users. The digital twins provide a readily available starting point for further risk assessment and allow for transparent synchronization of risk analysis and results over time. The digital platform may for example be realized as a cloud based platform and provide a location digital twins to a variety of users on request.

According to a variant embodiment of the digital platform of the present invention, there is provided at least one storage having at least one data-structure for capturing technical parameters and/or user-specific parameters. The technical parameters may comprise image data of a plurality of geographic areas, geo location parameters for locations in the geographic areas and/or measurement-based risk relevant data for locations in the geographic areas. The geo location parameters are technically measurable parameters for example indicating a latitude, longitude, elevation, surface area and/or soil conditions of the sub area and/or the property asset of interest. The user-specific parameters may comprise property-specific information data about the property asset of interest like for example a name of a user or proprietor, a date of creation of the property or creation of the digital twin, a property or customer identification code, a name of the location and/ or use of the location.

The measurement-based risk relevant data for locations in the geographic areas may for example include weather and wind data for the geographic area, humidity, extraordinary rain fall and hail events, water level, tide information, type of land-use, etc. The measurement-based risk relevant data may for example be extracted from existing digital risk analysis tools such as a CatNet tool. For example, the CatNet tool (short for Catastrophe Network tool), provides an internet service offering users comprehensive information data on natural hazards worldwide. CatNet enables users to gain a fast overview of natural perils by means of an electronic atlas. It provides easy access to up-to-date maps, showing the technically measurable characteristics of most relevant perils worldwide. The tool helps to estimate more accurately the risks for any location on earth, which is particularly useful for the insurance industry. CatNet further provides country-specific insurance portfolio information and loss event data. An application programming interface may be used to provide image data, geo location parameters, location data of natural hazards and hazard impact data derived from the CatNet tool to the processing circuitry of the digital platform.

According to a variant embodiment of the digital platform of the present invention, the processing circuity may further comprise a data receiving module, a display module and a user interface module. The data receiving module is configured to receive image data of a geographic area for display by the display module. The image data may for example be provided by the CatNet tool as mentioned above, or any conventional image data base providing for example satellite imagery of geographic areas of interest for the risk analysis. The user interface module is configured to receive user input defining a boundary around the physical property asset at the location of interest for display by the display module. In a first step, the user interface may allow for entering a property asset identification to identify the sub area of the property asset, or a first selection of a boundary by drawing a rectangle, polygon, or circle over the area of the property asset of interest as indicated above. In a second step, the user may refine the sub area or the boundaries according to an outer contour of the property asset. Alternatively, the processing circuitry identifies the outer contours of the property asset and adjusts the boundary of the sub area. Further, the user can add property specific visual information about structural characteristics of the property asset, like indications of corners of a structure or levels of a building. For convenient identification, the location digital twin may be indicated as an aerial overview of the geographic area including the boundaries around the physical property asset at the location of interest and the asset risk parameters.

In a further variant embodiment of the digital platform of the present invention, the processing circuity may comprise an image recognition module configured to recognize a property asset in the sub-area on the image of the geographic area and display structural characteristics of the property asset. The structural characteristics may for example indicate walls, floors, and roofs, etc. of the property asset. To display the structural characteristics the processing circuitry may comprise a computer aided design (CAD) tool as conventionally used for drafting two- or three-dimensional objects on a computer display. The processing circuitry advantageously extracts at least some of the geo location parameters used for the location digital twins from the image data. For example, the type of terrain surrounding the property asset of interest, or the terrain inclination can be derived from the image data.

In a still further variant embodiment of the digital platform of the present invention, the processing circuity may comprise an aggregation module configured to aggregate the image data of a geographic area, geo location parameters for locations in the sub-area and measurement-based risk relevant data for locations in the sub-area to generate the location digital twin for a property asset of interest in the sub-area. The aggregated data advantageously define a standardized set of property risk parameters at least including geo location parameters and measurement-based risk relevant data for each location digital twin of a physical property asset. Preferably, the aggregated data also includes a view of the sub-area and standard structural characteristics of the property asset of interest. The aggregation module provides comparable property asset profiles in form of the digital twins that can easily and quickly be accessed after the digital twin once has been aggregated and stored in the framework structure.

The modular design of the digital platform may further comprise a geocoding module for applying geocoding to the sub areas and/or the property asset of interest identified in the sub area to provide geographic coordinates for example as geo location parameters of the sub area or the property asset. The geocoding module may provide identification data to the processing circuity for refining the location digital twin of the identified property asset.

In a variant of the method for automated risk analysis according to the invention, the asset risk parameters of the digital twin can be augmented by user input via the user interface. The user input for example comprises additional geo location parameters, additional measurement-based risk relevant data and/or property-specific information data about the property asset of interest. The user can add input into the sub-area as visual information using a CAD tool, or the user can add numerical or verbal information. For example the user interface may provide a digital input form with several input fields for different property-specific information as commonly used to capture user input. The user input may for example refer to a name of a user or proprietor, a date of creation of the property or creation of the digital twin, a property or customer identification code, a name of the property or the location and/ or use of the location as mentioned above. It may also refer to the height of a structure, a construction type of a structure, information relevant for fire prevention and other protection measures.

In an advantageous variant of the method for automated risk analysis according to the invention the asset risk parameters can be presented as a location score card for the measurement-based risk relevant data of the property asset of interest. The score card can be set up as a matrix concept and indicate a variety of data information by way of table for example. The score card provides a clear presentation of the relevant risk information about a property asset of interest that supports a quick understanding of the risk situation of a property asset. In combination with visual display of the property asset on the image of the geographic area a user receives a comprehensive first outline of a risk analysis that is based on reliable and well established information about the property asset.

### Brief Description of the Drawings

The present invention will be explained in more detail below relying on examples and with reference to these drawings in which:
Figure 1 shows block diagrams illustrating schematically an exemplary digital platform for automated risk analysis for a physical property asset according to the present invention.
Figure 2 shows block diagrams illustrating schematically an exemplary geographic area and identified sub area for generating a location digital twin using of a property asset in the sub area using the method for automated risk analysis according to the present invention.
Figure 3 shows block diagrams illustrating schematically an exemplary method for automated risk analysis for a physical property asset according to the present invention.
Figure 4 shows block diagrams illustrating schematically an exemplary data aggregation process of the method for automated risk analysis for a physical property asset according to the present invention for generating a location digital twin of a property asset of interest.

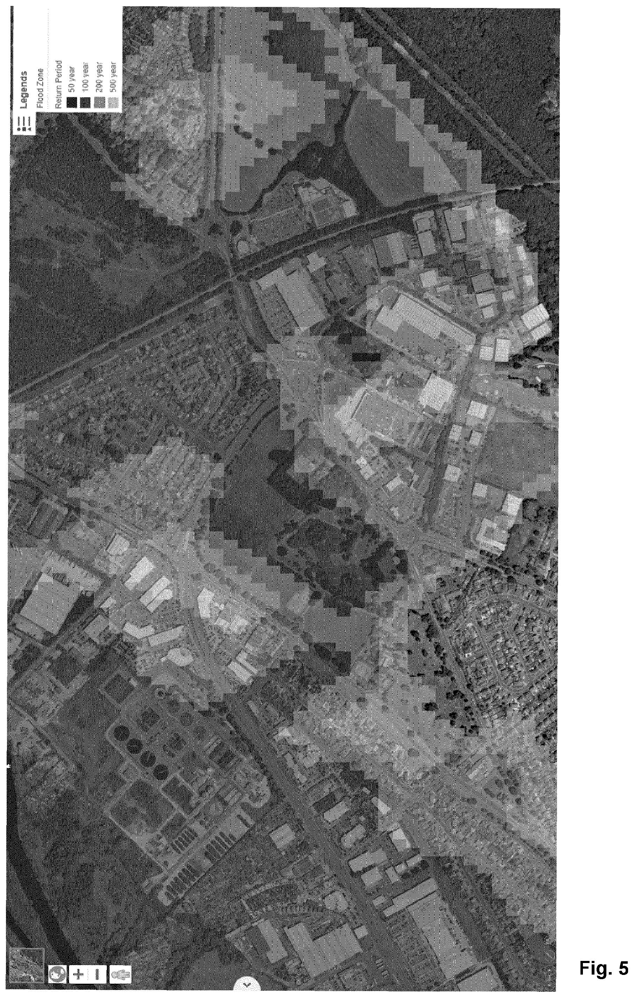

Figure 5 shows diagrams illustrating schematically an exemplary image of a selected geographic area with the flood zones assigned.

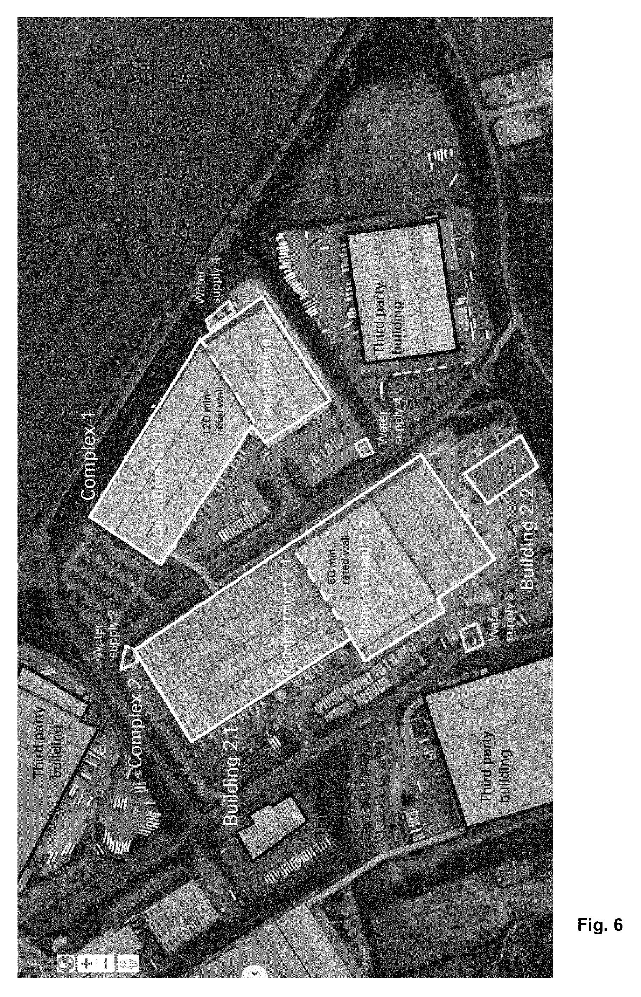

Figure 6 shows diagrams illustrating schematically an exemplary first step of graphically adding construction information by using a graphical interface and indicating complexes, buildings and compartment using the graphical interface. Site layout and separation distances are shown. The user indicates locations of third party buildings and exposure and defines fire ratings of partition walls. Finally, the user indicates areas where information is required (or unknowns).

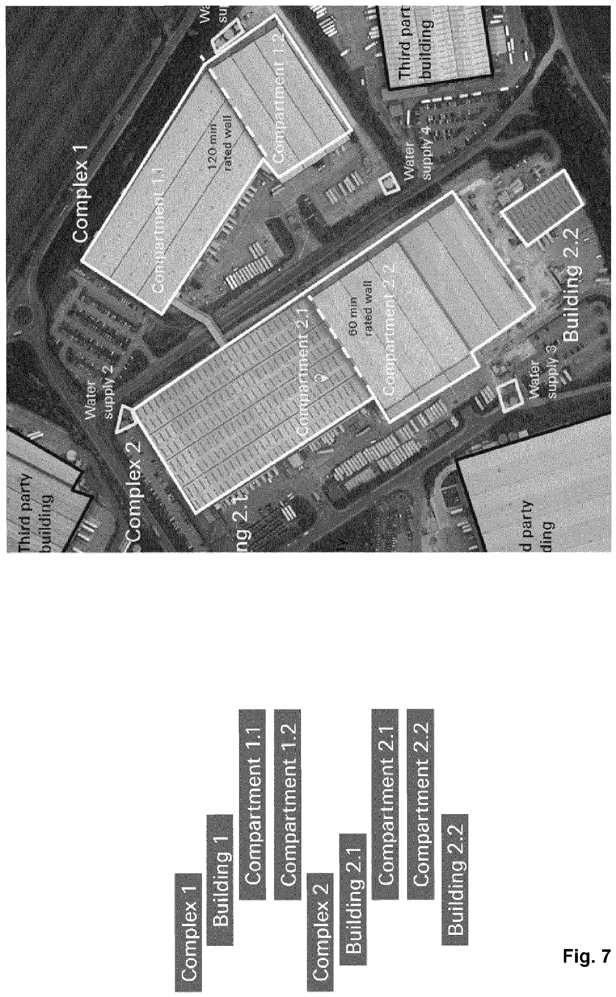

Figure 7 shows diagrams illustrating schematically an exemplary second step of building up the information in flexible levels. The system allows to build up a site e.g. in layers.

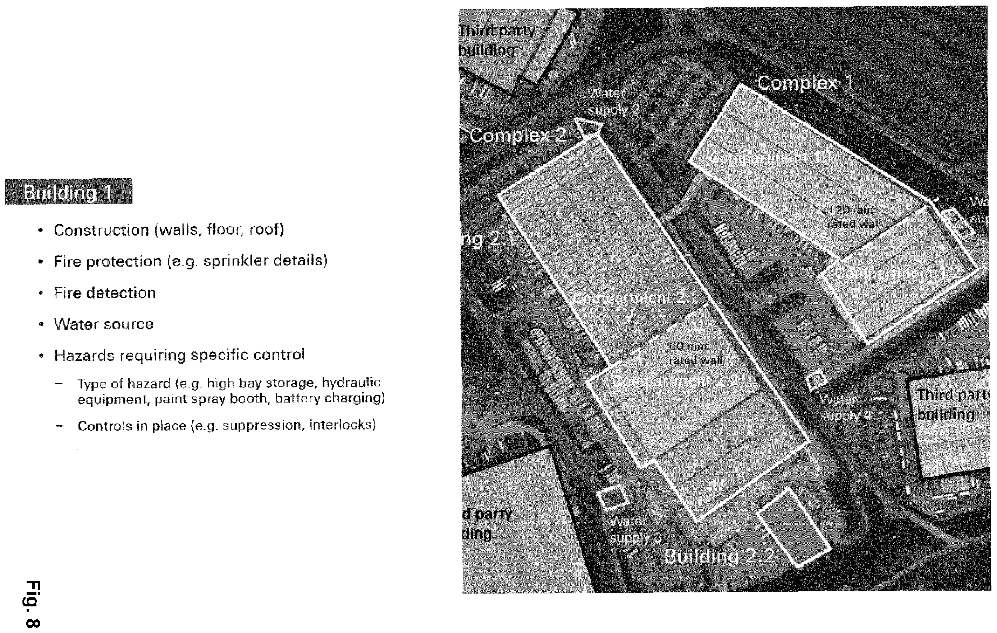

Figure 8 shows diagrams illustrating schematically an exemplary third step of adding further construction, occupancy, protection, exposure (COPE) details. COPE details can e.g. be assigned at any relevant level or layer. The system allows e.g. to switch between sit layout or tabular format. Additional information can e.g. be displayed by the system on the layout (e.g. show areas of combustible construction). The system can e.g. further allow to auto-populate rating tools by the discussed process. In a fourth step, the system generates loss scenarios. To develop the loss scenarios, values can e.g. be entered at site level. The system can e.g. auto allocate values per building pro-rata, and e.g. update or adjust values. Values can e.g. be entered at building or compartment level. Critical equipment or process flows can e.g. be indicated on the layout plan. Buildings and loss damage percentages can e.g. be selected from the layout or via a table format. Loss scenarios can e.g. be shown on the layout. The system can e.g. further comprise digital support tools for guiding separation distances based on distances and fire load. The system can e.g. also output alarm analyses or warnings (e.g. values per sq.m). The assigned site level information can e.g. comprise human element controls and/or fire water supply and/or fire brigade/emergency response and/or external exposures and/or business interruption and/or natural hazard (e.g. integrated by a Geoportal).

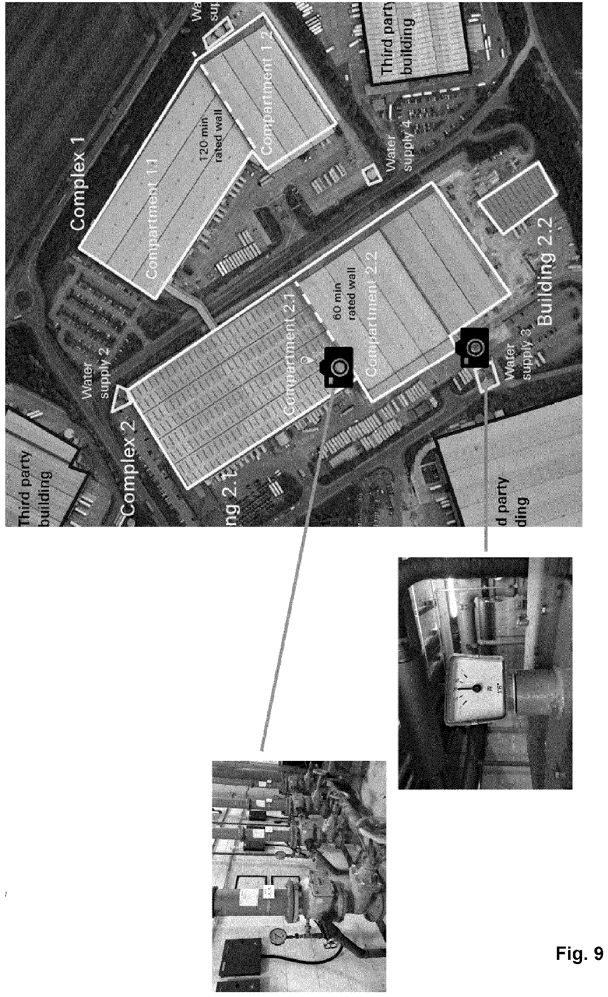

Figure 9 shows diagrams illustrating schematically an exemplary forth step of automatically adding photos (e.g. fire pump fuel tank; see figure 9), with their location automatically added via geocodes or manually located by the user. Photos locations can e.g., be directly shown on the digital plan.

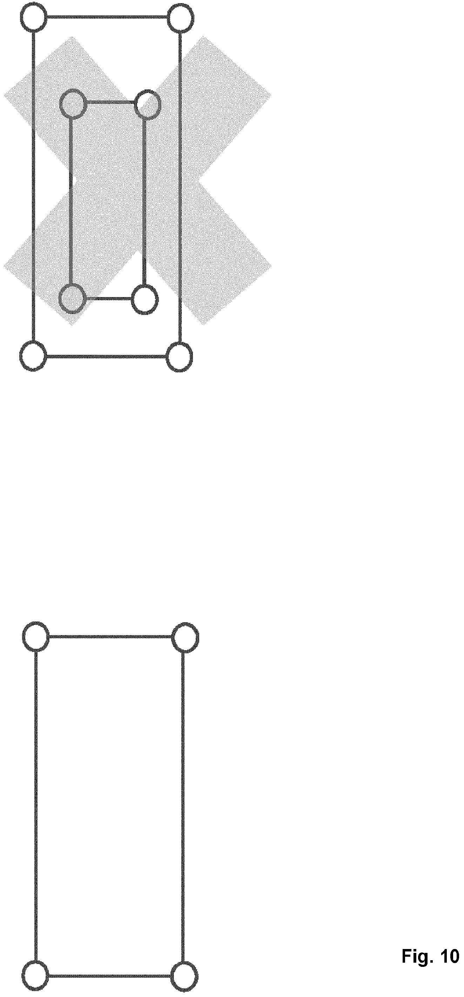

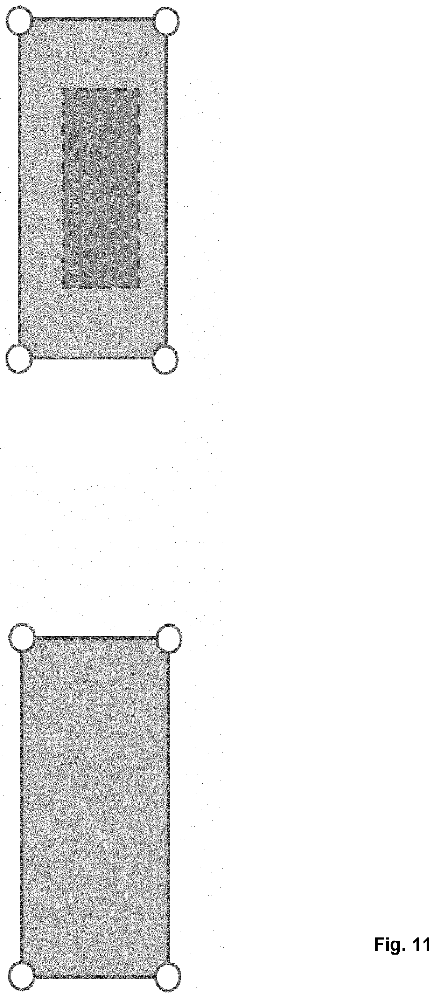

Figures 10 and 11 show diagrams illustrating schematically an exemplary creation of polygons based on geo-encoding of addresses, in combination with building inventory lists and picture recognition algorithm - a unique Polygon is created In case the Polygon is already found (was already created by another user) duplication can be prevented with-out disclosing this. As an example: A user (i. e. a tenant in a shopping mall) uploads her address (Main Street 1). The system identifies that the shopping mall is already created as a "Master Polygon" (most likely the area underneath the same roof). The user is shown this master polygon, but unless she has proper access rights not the fact that another user has already created this. She can highlight the area where her shop is located (this still bears the problem of how to show different floors). Her child Polygon is always part of the Master Polygon so that only one Shopping mall is created instead of multiple ones. In the prior art system, normally the ownership as a key data-point defines the master hierarchy in the underlying data-model. Such you would typically see: Client Name (owner) Example: "LDT Enterprises". Then all underlying data such as follow this Master Hierarchy (Country, City, Street Name, Street Number etc.). The uniqueness of the object created by the inventive system brings the advantage to rule-out duplicate objects. This plays a crucial role in analyzing and processing supply chain data, external suppliers, or even upstream customer clusters. In such, a Polygon once created cannot be created a second time nor can any new polygon be created within the original "Master Polygon (see figure 10). In the inventive system, the child polygon is rather "assigned" to a data-hierarchy one level lower than the Master Polygon (see figure 11).

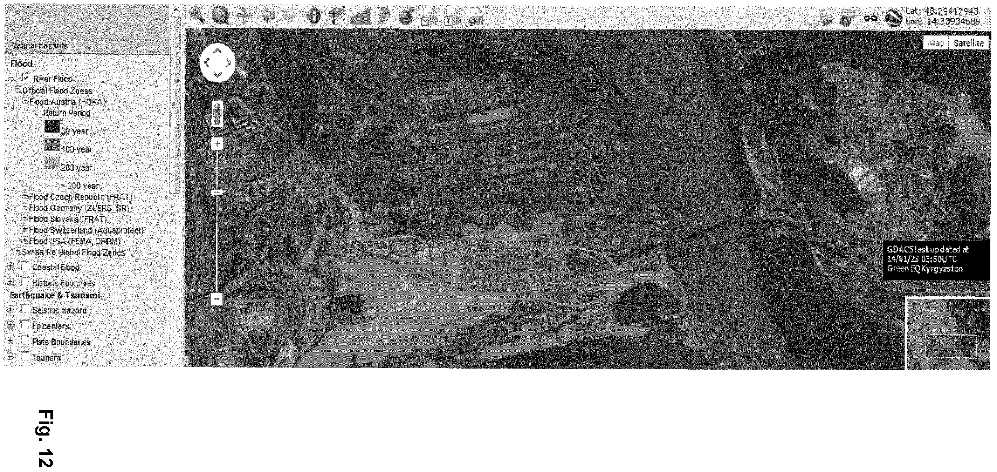

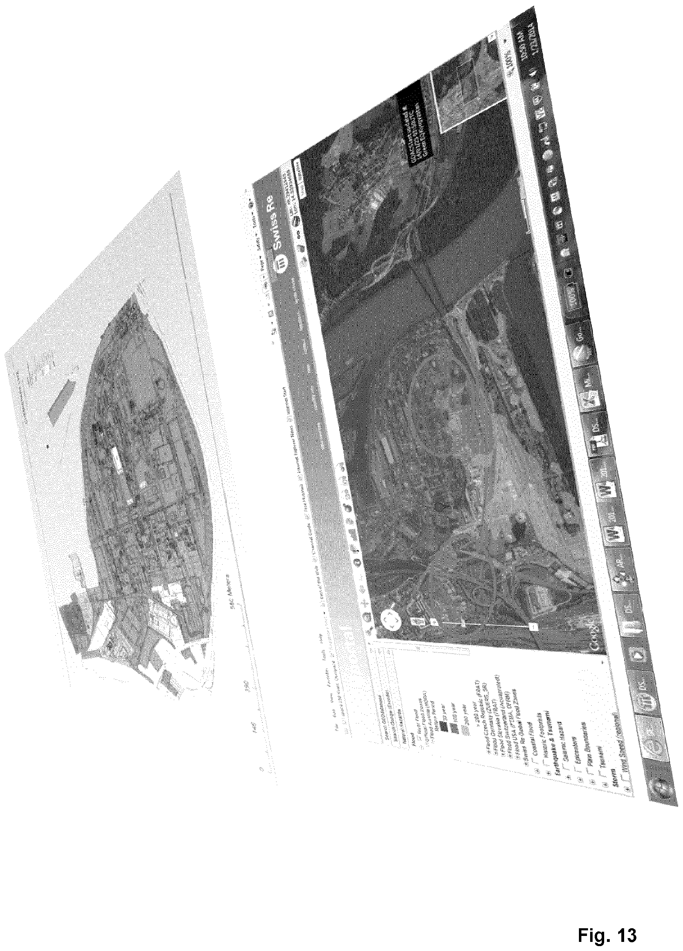

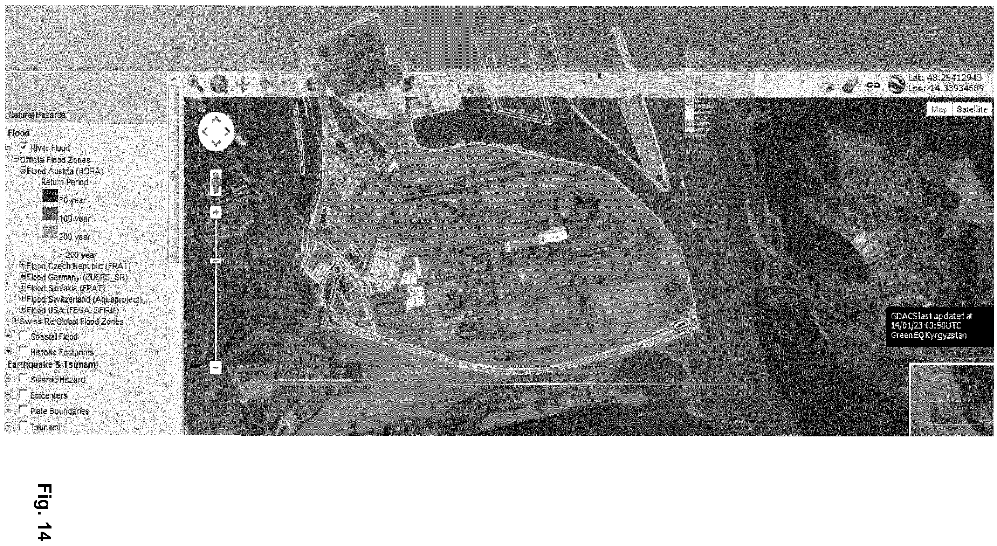

Figures 12 to 14 show diagrams illustrating schematically an exemplary stepwise process of the inventive system using a combination of a plant lay-out overlaying this with satellite images such as GoogleEarth, BingMaps, etc. starting with figure 12 up to figure 14.

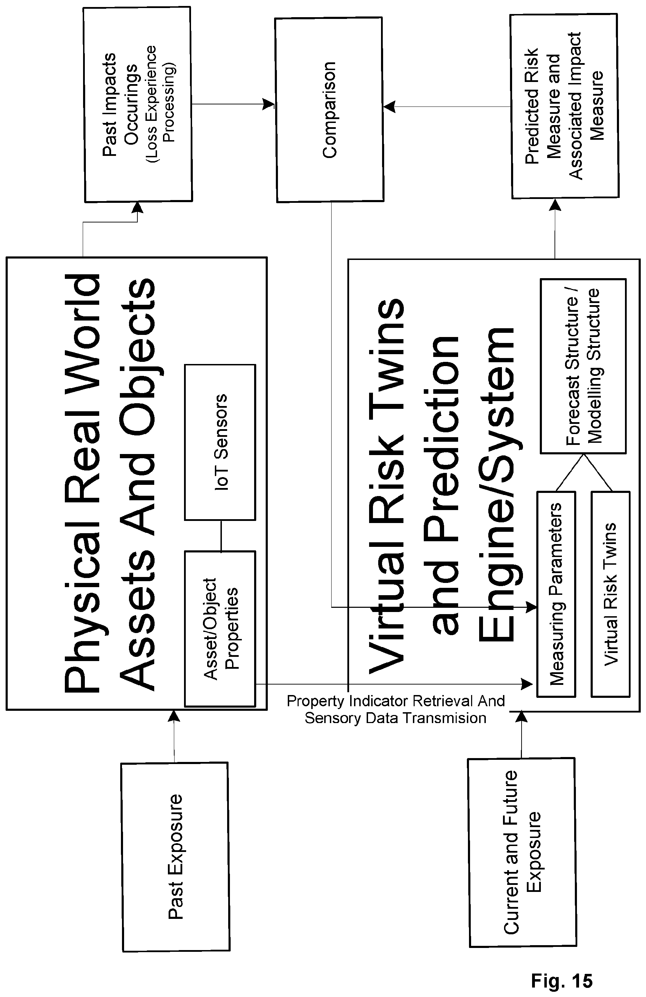

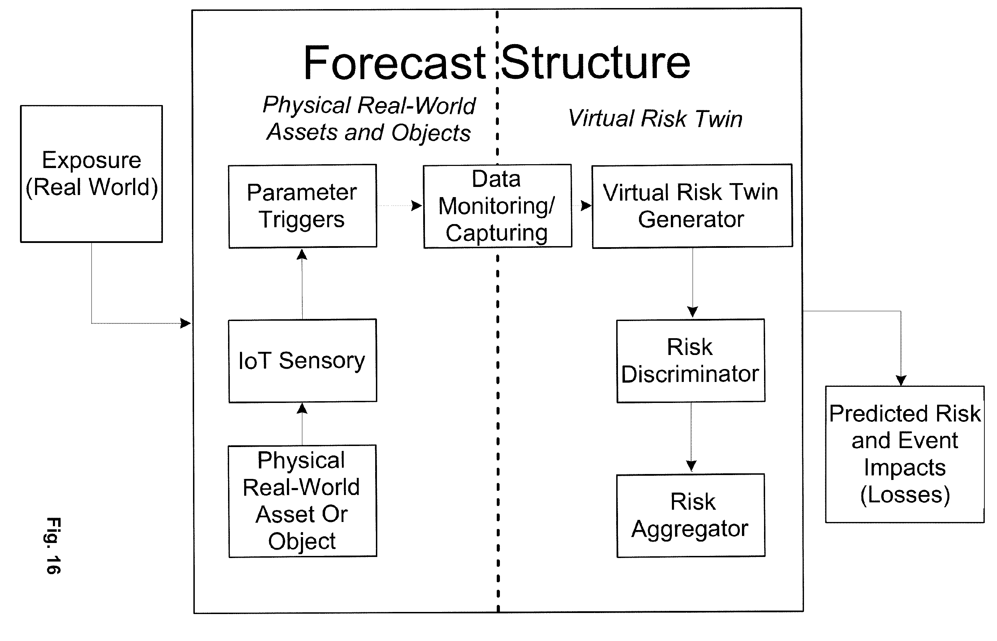

Figures 15 and 16 show block diagrams, schematically illustrating the basic structure comprising three main parts: the predicting digital risk twin structure, the properties indicator retrieval, and the impact experience processing. The virtual risk twin structure allows to forecast quantitative risk measures and expected impact/loss measures from the digital risk twins using characteristic technical main elements, namely the digital risk twin structure with the simulation and synchronization means and the loT sensory providing the constant real-world streaming linkage and connection.

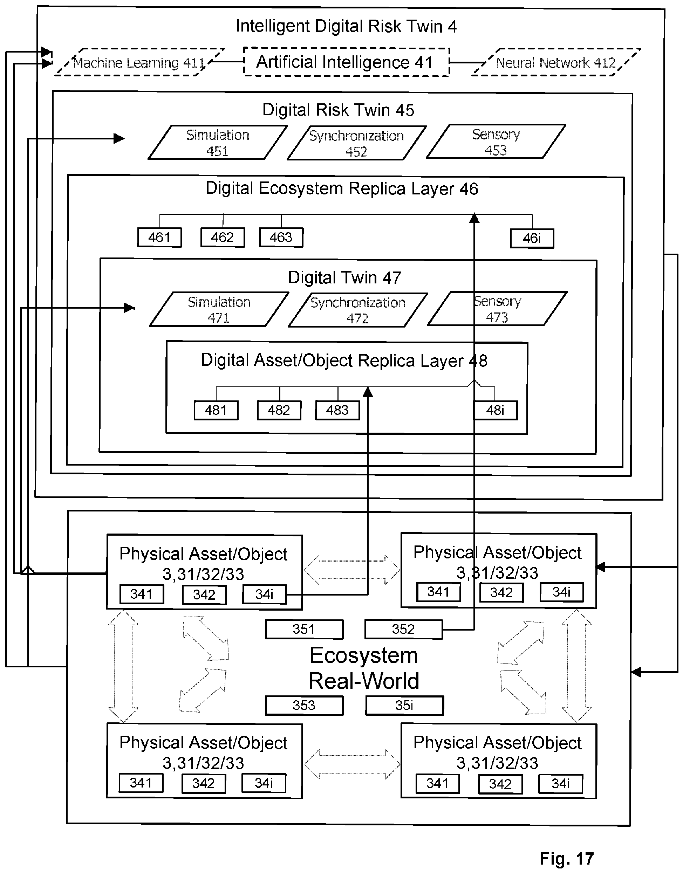

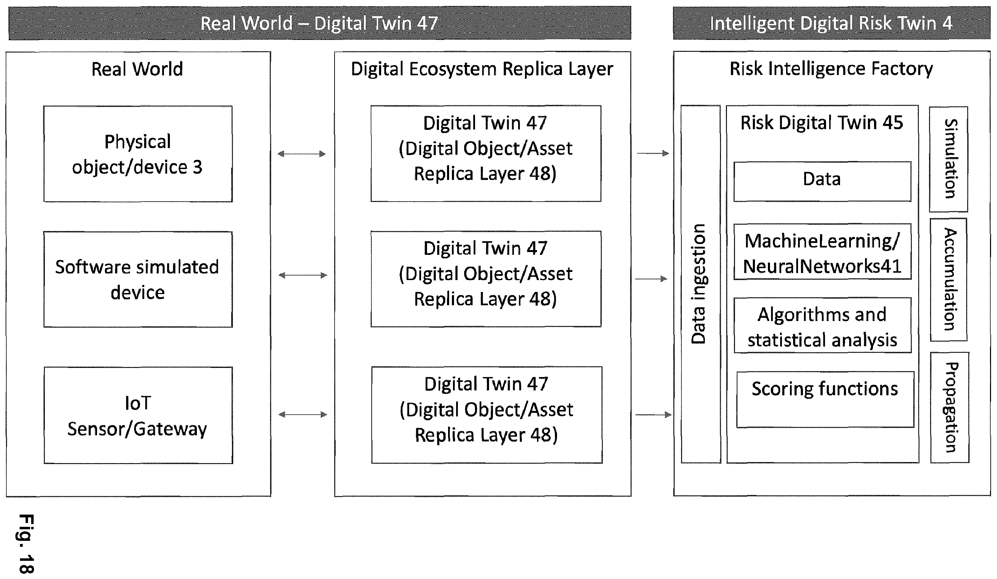

Figures 17 and 18 show block diagrams illustrating schematically an exemplary digital risk twin, which can be made available throughout the entire lifecycle of the real-world asset 31/32 or object 33 and/or digital platform 1 through its structure, as shown in Fig. 17 and 18. Figure 17 shows the digital asset/object replica 48, the digital twin 47, the digital ecosystem replica 46, the digital risk robot 46 and the digital twin 4 with its optional artificial intelligence 45 of a physical entity 3 in the inventive digital platform 1. In the digital platform 1 and digital twin 47, respectively, each physical asset/object 3 comprise its digital modelling structures 481, 482, 483,..., 48i and data. These modelling structures 481, 482, 483,..., 48i and data combined form a digital asset/object replica 48 of an asset/object 3. The digital asset/object replica 48 is then equipped with the three characteristics (1) simulation 471, (2) synchronization 472 with the physical asset/object 3, (3) active data acquisition 473, to form the digital twin 47. The digital risk twin 4 consist of all characteristics of the digital twin 47 as well as a digital risk robot 45 layer and optionally the artificial intelligence layer 41 to realize an autonomous digital platform 1. The digital risk robot 45 layer consists of its own digital modelling structures 461, 462, 463,..., 46i and data, where these modelling structures 461, 462, 483,..., 46i and data combined form a digital ecosystem replica 48 of the ecosystem 5 comprising the environmental interacting factors/entities and the interaction to other real-world assets/objects 3. The digital risk twin 4, realized as an intelligent digital risk twin, can therefore implement machine learning algorithms on available models and data of the digital twin 47 and the digital risk robot 45 to optimize operation as well as continuously test what-if-scenarios, used for predictive maintenance and an overall more flexible and efficient production through plug and produce scenarios. Having an intelligent digital risk twin 4 expands the digital risk robot 45 with self-x capabilities such as self-learning or self-healing, facilitating its inner data management as well as its autonomous communication with other digital risk twins 4.

### Detailed Description of the Preferred Embodiments

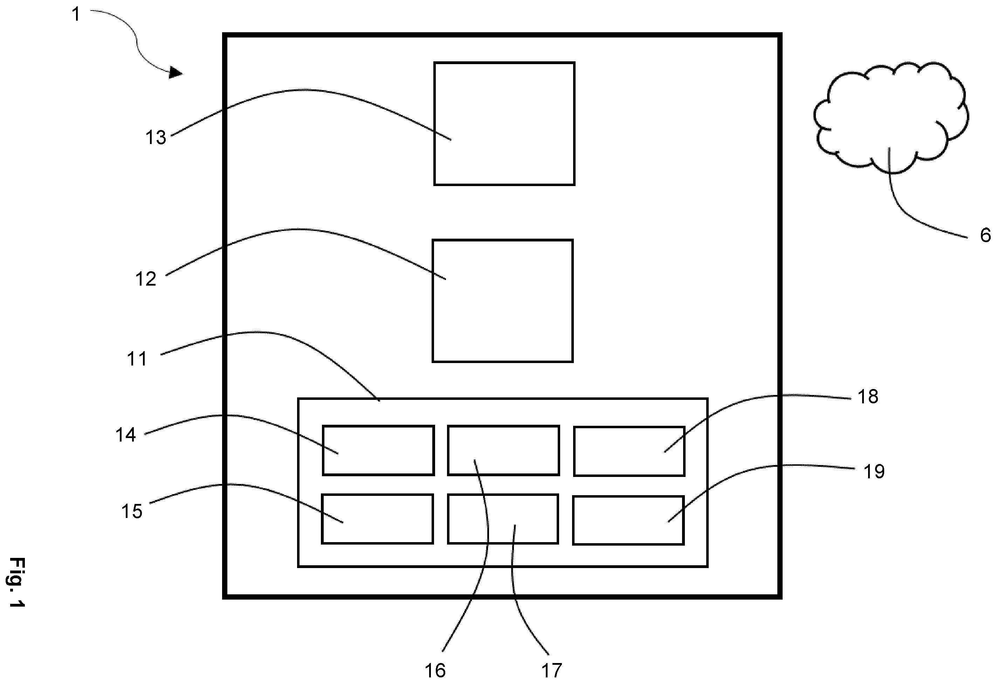

Figure 1 schematically shows a digital platform 1 for automated standardized location digital twins of physical constructions factoring in dynamic data and measuring parameters at different construction levels and generating standardized geo-encoding output. The dynamic data and measuring parameters at least comprise aerial digital imagery of a geographic area, geo location parameter values for locations in the geographic area and/or construction parameter values and/or measurement-based exposure parameter values and/or protection parameter values. The method comprises the steps of (A) capturing and displaying a digital imagery of a geographic area including a location of a physical construction of interest on a display of a user interface, (B) identifying a sub-area by indicating the construction identification by setting polygon-shaped boundaries around the physical construction at the geographic area to generate a digital 2-dimensional construction lay-out on the digital imagery, (C) merging the digital imagery of the geographic area with a 2-dimensional geographic or topographic digital event foot print of a selected natural catastrophic event, (D) assembling the digital 2-dimensional construction lay-out by graphically assigning hierarchic-structured levels comprising at least complexes and/or buildings and/or compartments via the graphical user interface, (E) extending the digital 2-dimensional construction lay-out by graphically assigning at least physical construction characteristic parameters and/or fire protection parameters and/or fire detection parameters and/or water source parameters and/or hazard control and protection parameters, and (F) generating a location digital twin based on the digital imagery and the combined digital 2-dimensional construction having a standardized output for the construction based on the dynamic data and measuring parameter values.

Assembling the digital 2-dimensional construction lay-out further comprises graphically assigning one or more floor levels providing a 3-deminsional volumetric construction lay-out on the digital imagery. Volumetric 3-dimensional assembling of the digital lay-out of the construction can e.g. be an important step when an architect designs a building on a given land site. For example, based on the local building codes applied to the construction, the building can e.g. be limited to be assembled within a valid construction space, which is usually not a regular cuboid. Within the valid construction space, a volumetric digital lay-out not only depicts the volumetric 3D shape of the construction or building but can also produce 2D digital layouts for each level or floor. The system 1 then can use the finalized volumetric digital lay-out to gradually develop all the details for construction, including physical facade or separating wall characteristics, interior structures, fire or hazard prevent or protection systems, etc. The impact of such systems can e.g. measurably depend on such volumetric characteristics of the construction. Thus, one of the technical advantages of such 3-demensional construction lay-outs for the location digital twin is that it allows to technically capture such volumetric-dependent impacts. Further, the proposed inventive construction process, provides a precise and user-friendly volumetric construction assembly for location digital twins which usually requires a significant amount of time and effort by the prior art systems. The inventive efficient pipeline to generate volumetric construction lay-outs for location digital twins brings a great impact on the construction industry.

To overcome technical challenges and limitations of the prior art systems, the invention is based on digital, polygon-based voxel layout, providing a novel 3D representation that can encode irregular voxel grids with non-uniform space partitioning. To bridge between the digital input imagery and the assembled polygon-based voxel layout, a pointer-based cross-modal modules is used in a generative adversarial layout network. The pointer module can be used not only for message passing, but also as a decoder to output probability over a dynamic set of valid boundary conditions. The main components of this embodiment variant are: (i) a new 3D location digital twin with a polygon-based voxel layout; (ii) a graph-conditioned generative adversarial network using GNN and pointer-based cross-modal module; (iii) an automated pipeline to assemble and generate valid volumetric construction levels and floors through simple graphical interaction; and (iv) a synthetic dataset that can e.g. contain known volumetric constructions and their corresponding layouts, which allow a new way of automated error detection of generated location digital twin, which no known prior art system is able to provide. The polygon-based voxel layouts combine voxel-based and graph-based or imagery-based layouts by encoding voxels into polygon-shaped graph nodes. To enhance the local modeling capability, it can e.g. have a high resolution point-based branch as well as a low-resolution voxel-based branch for point cloud encoding. Another feature of the inventive polygon-based voxel graph is the ability to support non-uniform space partition. The 3D location digital twin can e.g. be reconstructed by selecting space partition planes extracted from point clouds or images. An Al-network can e.g. be used to learn to generate compact meshes using binary space partitioning, which in return can e.g. be used to represent construction grids (i.e., columns and beams) of buildings. This embodiment variant has, in contrast to prior art system, further the technical advantages that (i) compared to the 2D counterparts, 3D voxel layouts of the constructions are not larger in size and are furthermore not more complex e.g. due to additional interrelations, (ii) the raw rasterized output used in prior art systems, in contrast to the inventive system, cannot produce clean corners and edges due to the fine discretization of pixels. For instance, boundaries are usually jagged, rooms can be poorly aligned and overlapping each other, there might be small dents or bulges in some rooms, etc., and (iii) volumetric layouts of the prior art systems (usually defined as 3D regular grids with uniformly discretized voxels) have the closest structural similarity to rectangular buildings than other 3D representations, such as point clouds or meshes. However, it is not computational and memory efficient to use this dense representation for pixel-based rooms. Moreover, in the prior art systems, there are voxels within the regular grid but not in the irregular valid design space that take unneeded memory and computation. These defects are overcome by the above discussed embodiment variant.

The invention takes a fundamentally opposite technical approach to know prior art systems: Rather than feeding additional data into the virtual copy of a physical asset or construction (object), it first takes a uniform standardized approach how to graphically create this virtual copy: the Location Digital Twin, or LDT. The key concept is using satellite images or where available existing lay-outs such as e.g. AutoCAD drawings, pdf- site lay-out etc. or any other visual representation of a physical asset. This inverse generation process is the starting point and in its most basic data-format only consists of the corner points of a polygon or any other definable structure, suited to create a defined polygon-based construction lay-out, by anchoring the polygon to a globally accepted positioning approach such as Latitude / Longitude or any other suited solution. Additional information can e.g. be the added based on the user specific preferences. The invention's outcome is a uniform data-standard for an LDT which can be used by any downstream data platform, user or application, or even manual use. Hence the invention builds the foundation of any of these above mentioned usages. In addition to creating a uniform and standardized data-exchange format, the invention will provide an approach to automate the creation of an LDT. The imagery will be fed into a machine-based solution which identifies the polygon, creates it based on its corner points or any other suited solution and converts it into the data-Exchange format. This scalability in addition to the usability due to the uniform data-exchange format will function as key value drivers, getting additional users to accept and use as the invention as the globally accepted superior approach to create LDTs and exchange information about LDTs. The usage of this is not limited to risk information and can be scaled-up to include any other usage for a LDT such as for example finance, governance, investment, operations, etc. Once exponential growth is reached, new valuable information can be created (see data-plausibility paragraph) by the digital platforms, applying the invention.

Another technical advantage comes from a novel accessible data-plausibility / integrity. The existence of a globally accepted superior data-exchange format further provides opportunities to develop and execute data-plausibility services. As an example, once a polygon is created, the digital platform using the invention can calculate the surface area (i. e. in m²). Platform users who authorize the anonymized usage of their data could enter the insured value or any other key performance indicator. This way anonymized data benchmarks are created by the digital platform and can be shared with users who signed-on to this feature. Any data-outliers such as a location with a surprisingly high or low insurance value per m² etc. could be identified, enabling other digital platforms to connect service providers with potential customers how to address these data-inconsistencies per individual physical object or even on a larger scale how to refine the data-creation and data-based decision making process. Hence the invention has the potential to build the foundation as a propellant or enabler to other digital platform solutions.

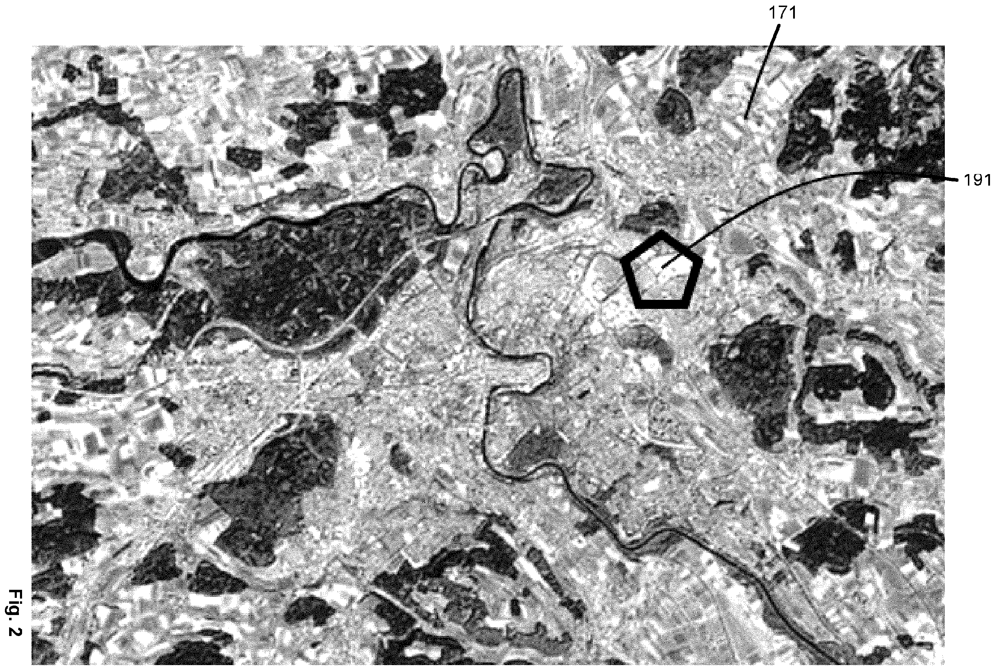

Fig 2 shows a possible starting point for a method for automated risk analysis according to the present invention. An image 171, like a satellite image, of a geographic area including a location of a physical property asset of interest is displayed on the display module 15. A user identifies a sub-area by setting boundaries around the physical property asset at the location of interest using the user interface module 18. The boundaries can for example be indicated by spanning a rectangle, polygon, or circle over the property asset of interest. Alternatively, the user could enter or upload identification information, like an address of the property asset of interest, and the geocoding module 19 identifies the location of interest on the image. A list of several property assets of interest may be uploaded to identify several property assets of interest.

The location digital twin system 1 receives geo location parameters and measurement-based risk relevant data for the sub-area location of interest from the at least one persistence storage 12, a cloud data platform 6 and/or an external data processing tool, like CatNet. The data processing engine 11 combines the geo location parameters and the measurement-based risk relevant data for the sub-area as asset risk parameters for the physical property asset and generates a location digital twin of the physical property asset indicating the image of the geographic area, the sub-area boundaries, respectively the location of the property asset, and the asset risk parameters, which can be stored in the framework structure 13.

The digital platform captures a plurality of location digital twins for a plurality of physical property assets at a plurality of locations. The plurality of location digital twins can be used by various entities for risk assessment by accessing/downloading a location digital twin of interest. The location digital twins also can be refined by a user with additional information for example about the location or about the property asset. The refined version of the location digital twin can replace the existing location digital twin and can be made available for other users for risk assessment. This way double work can be avoided to create a new digital twin as a starting point any time a risk assessment has to be reviewed or a new user performs a risk assessment. The location digital twins may serve as an up-to-date pre-survey for the risk analysis as a basis for further risk assessment.

In an advantageous variant each location digital twin of a physical property asset includes at least a standardized set of asset risk parameters including geo location parameters and measurement-based risk relevant data. The standardized set of asset risk parameters preferably includes an image of an aerial overview of the geographic area of the sub-area including the property asset of interest. This defines a data presentation standard for physical property assets that is already available in the upstream process of property asset risk analysis. Therefore, the downstream process of assessing a specific risk for the property asset at a given point in time is simplified and based on transparent existing and past information.

In summary, in the core version of the method a geo-based creation of a location using an application processing interface (API), like CatNet or similar, is used to draw a polygon or the like for the sub-area or upload asset identification information. The user interface module shows an aerial overview as well as a data-collection table for the asset risk parameters and a core set of asset risk parameters is combined as a standardized data set of the location digital twin. The core version advantageously provides a fixed query allowing to create lists with common features. The following relevant data points can be used:
1. Lat / Lon
2. Elevation (m AMSL)
3. Area (m² or sqft)
4. Number of individual sub areas (i.e. 1, 2, 3, ...)
5. Surrounding terrain (using drop box or picture recognition)
6. Soil conditions (to be imported from data base)
7. Natural catastrophe exposure as an automatic risk look-up from CatNet

The core method for automated risk analysis for a physical property asset according to the invention as described above can be enhanced by additional and alternative data handling and processing options as well as additional use and presentation variants. Advantageously, the method can be extended by a variety of processing modules improving various aspects of the core method.

Using a first additional method module, a user can expand the standardized data set by adding additional information, thus creating an extended standardized data set. The following data points can be added for example via a flexible input wizard:
1. Name of user
2. Date of creation
3. Customer name (free text)
4. Customer ID (uniform format for all users)
5. Location Name (free text)
6. Location ID (uniform format for all users)
7. Location Activity (free text)
8. Location Activity (PIC code or property classification for example "Admin, Production, Warehouse, other)

The user further determines a desired hierarchy by selecting only to enter "Location" information or by drawing further areas such as complexes, buildings, areas etc. Further, the processing circuitry can be configured to provide section views to even enter basement or information per floor level. The section views can provide different vertical layers of the property asset of interest. Several layers of the property asset can be indicated for the location of interest. In addition, colored-coded layers can be available using the application processing interface, like CatNet, showing basic features such as the relevant data points 16-24. Further data points to be entered include for example:
1. Building name
2. Building year of construction
3. Building height (m or ft)
4. Building basic construction type (free text)
5. Building basic construction type (fire resistive, non-combustible, partially combustible, combustible)
6. % smoke detectors (free text)
7. % smoke detectors (drop-down: 0%, 0-10%, 10-50%, 50-90%, 90-100%)
8. % automatic fixed protection (free text)
9. % automatic fixed protection (drop-down: 0%, 0-10%, 10-50%, 50-90%, 90-100%)

The output provided by the processing circuitry can be a location score card as shown below. The score card can be provided for example as word document (pre-filled, but editable) or an xlsx-spreadsheet using a matrix structure or a digital data-exchange format (i.e. MP3). Checklists and structured data developed pre-surveys are made available to make a field engineering survey more efficient.

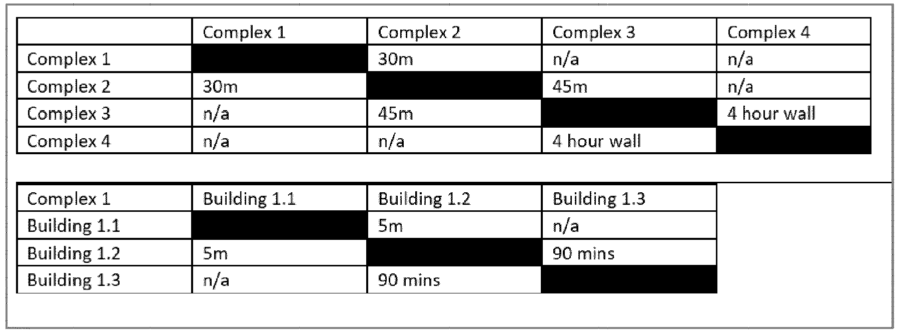

Advantageously, in the first module the processing circuitry is further configured to provide risk improvement advice (recommendations). The user can highlight a point within the location or a sub-area, tagging recommendations. A wizard opens and for example the following relevant data points are added:
1. Recommendation number (uniform for all users, included Customer ID and Location ID Example code: 100(Customer ID)-200(Location ID)-001(Rec Number)
2. Recommendation headline
3. Recommendation type (drop-down: Physical improvement, Organization improvement, natural hazard improvement)
4. Recommendation priority (drop-down: High / Medium / Low)

In a variant of the method, wherein a user sets boundaries around the physical property asset and defines a sub-area within the geographic area image, the image recognition module can be used to identify the property asset of interest withing the set boundaries. The user draws a rectangle, polygon, or circle, marking the "window of view". A picture recognition algorithm (PRA) of the image recognition module identifies walls and roofs, incl. roofs with different color and suggests individual buildings to the user. The user then can easily move points of the boundaries, draw new walls, etc. This user experience follows the human work, for example of a field engineer, as much as possible. Field engineers typically draw the largest building first and then add interior walls and subdivisions etc. later.

In a variant of the method using a geocoding module, any kind of document including identification information identifying the property asset of interest can be assigned to the location digital twin of the property asset. These are for example pictures, attachments or product type documents related to the property asset. This way these documents are tagged to the location or building and can easily be accessed for risk assessment.

Further data points to be added to the location digital twins as part of the first module can also include data about the value of the property asset. The processing circuitry can then calculate the value concentration (i. e. €/m² or $/sqft etc.). In this case, the digital platform can be provided with a link for example to the European Central Bank's data base and an automatic currency convertor. This data can be used for future benchmarking.

A second additional module and method may allow for a customized data collection query. While the standardized data collection of the core version and the first module mainly solves problems creating cost value added for field engineering, the second module allows users to upload and create their own data collection forms, for example to expand the cost value added into an underwriting landscape. Further, the processing circuitry is configured to upload activity lists of a user (many incumbents use SIC code or the accounts of the former German tariff, etc.). In addition, the above indicated data points, especially 25-28, can be altered. Additional data points can be activated or de-activated such as:
1. needed investment (free text)
2. needed investment (Drop-down: 0-10.000 € / $; 10.000-50.000 €$; 50.000-100.000 € / $; > 100.000 € / $
3. reliable needed investment (free text) Users can enter real values overwriting the field engineers' estimation.
4. reliable needed investment (data field)
5. ratio of estimation vs reliable value
6. Loss Estimate before (Drop-down: 0-100.000 € / $; 100.000-1.000.000 € / $; 1.000.000 - 5.000.000 € / $; 5.000.000 - 10.000.000 € / $; 10.000.000 - 50.000.000; > 50.000.000 € / $).

These data points provide strong benchmarking capabilities, comparing insured value per area with loss estimate per area. Advantageously, data for %-damage per area will be made available. Using the additional data of the second module, cost-benefit studies can be done. The processing circuitry calculates the ratio of estimation vs reliable value, allowing field engineers to continuously improve. This way, the digital platform providing the location digital twins becomes highly attractive for risk engineering companies.

Further additional method modules for the core method for automated risk analysis according to present invention, may include a property asset classification system, a rating system, a loss estimate evaluation system, a system considering special hazards, a system considering special industries, a natural catastrophe system, and/or a system considering sustainability. All modules will provide platform value-added by offering benchmarking capabilities, flexibility to change, and adjust data-collection queries. Crowd-sourcing options may be used to translate into local language. The additional information data can be included into the location digital twins.

For example, the property asset classification system may include an insurance classification system. Key risk factors are listed, further enabling field engineers to focus on the most relevant topics.

The rating system may provide an overall account rating and account score card, and may provide for example the following data points:
1. Name of field engineer providing a rating
2. Company of field engineering provider
3. Rating of a standardized rating methodology (for example using a 5-category rating will be used)
4. all locations with certain ratings

The loss estimate evaluation system may provide information about current normal loss potential by incorporating an external loss potential framework using the application processing interface. The loss estimate evaluation system can be combined with the risk improvement advice system of the first module. Data about the loss estimate savings help to refine risk improvement plans and the strength of risk management programs.

The system considering special hazards may include information about protection requirements and defined hazard ratings. The system may provide data point regarding to:
- Flammable Liquids
- Combustible explosive dusts
- Molten breakouts
- Rotating equipment
- Electrical integrity
- Mechanical integrity
- Cyber and data security
- supply chain risks

The system considering special industries may integrate needs and demands of special industries and required protection measures. Special industries are for example: automotive industry, chemical and petro-chemical industry, pharma industry, and steel industry.

The natural catastrophe system may include detailed information data about floods, earthquakes, windstorm, etc. into the location digital twins. The processing circuitry can access existing natural catastrophe models and tools using the application processing interface and share model assumptions and develop a framework which allows users to over-write and adjust key modifiers. The system allows users to identify hot spot locations and perils and run what-if analysis for implemented protection. Further, information from established loss-frequency curves may offer a holistic view on property asset risk both in regard to probability as well as corresponding severity.

The system considering sustainability will include required sustainability protection requirements. After users have selected their sustainable development goals (SDG) they define the current level and the future improvement target. During cocreation, key aspects to drive environmental, social and governance (ESG) ratings can be integrated into the data-collection process. Data points such as water consumption or carbon emissions per unit produced, etc. can be included into the location digital twins.

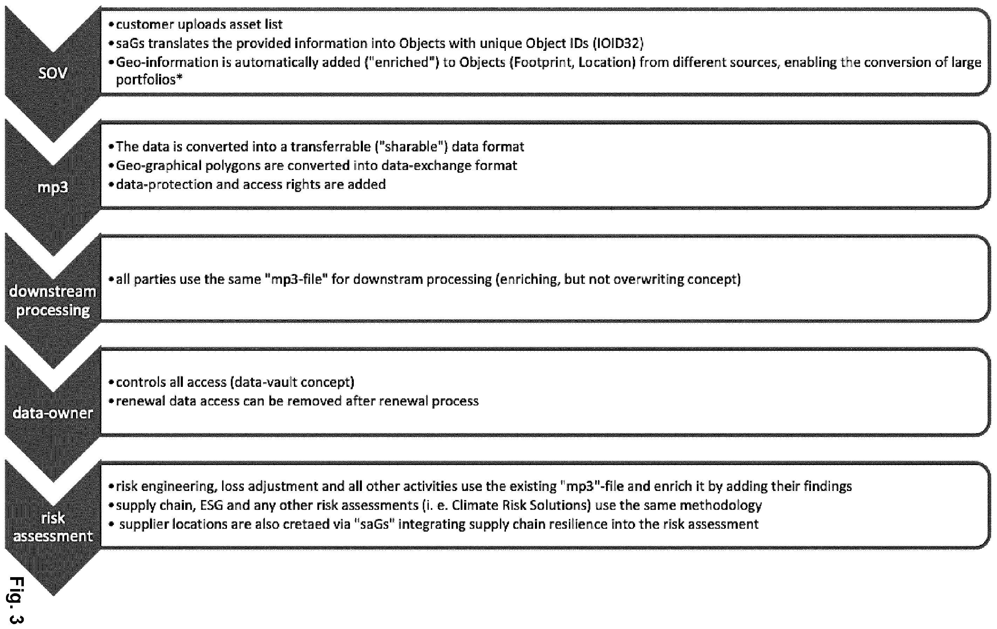

Figure 3 illustrates a method flow for an example variant of the method for automated risk analysis for a physical property asset according to the present invention. Data for generating the location digital twins, like image data of a geographic area, geo location parameters for locations in the geographic area and measurement-based risk relevant data for locations in the geographic area, is provided as mentioned above. In a first step, the SOV step, a user uploads an asset list, for example in form of a large sometimes unformatted xlsx-spreadsheets. The processing circuitry translates the provided information into objects representing a property asset of interest and provides a unique object identification (ID). Geo-information in form of the asset risk parameters, i.e. the geo location parameters for the locations of the property asset and measurement-based risk relevant data, is automatically added ("enriched") to the objects from different sources, enabling the processing of large portfolios. In a second step, the mp3 step, the data is converted into a transferrable ("sharable") data format, like mp3, to generate the location digital twin. Geo-graphical polygons are converted into data-exchange format, and data-protection and access rights can be added. In a third step, the downstream step, all parties are able to use the same "mp3-file" for downstream processing. Advantageously, users are able to enrich, but not to overwrite the data. In a fourth step, the data-owner step, the data-owner can control all access (data-vault concept). It is possible to remove the renewal data access after a renewal process. In a fifth step, the risk assessment step, risk engineering, loss adjustment and all other activities using the existing "mp3"-file are performed and the file can be enriched by adding their findings. Any of the above describe method modules can be used to enrich the data of the asset risk parameters.

In one example application of the method a user (e.g. a tenant in a Shopping mall) uploads her address (Main Street 1). The processing circuitry identifies that the shopping mall is already created as a "Master Polygon" comprising the location digital twin of the location. This is for example the area underneath the same roof. The user is shown this master polygon. She can highlight the area where her shop is located and a "Child Polygon" is defined. Her Child Polygon can always be part of the Master Polygon so that only one Shopping mall is created instead of multiple ones.

Today, normally the ownership as a key data-point defines the master hierarchy in the underlying data-model. However, additional users of an existing location digital twin may be granted master rights, restricted right, just viewing rights or any other type of defined rights for the file of the location digital twin. The uniqueness of the location digital twin created brings the advantage to rule-out duplicate objects. This plays a crucial role for example in analyzing and processing supply chain data, external suppliers, or even upstream customer clusters.

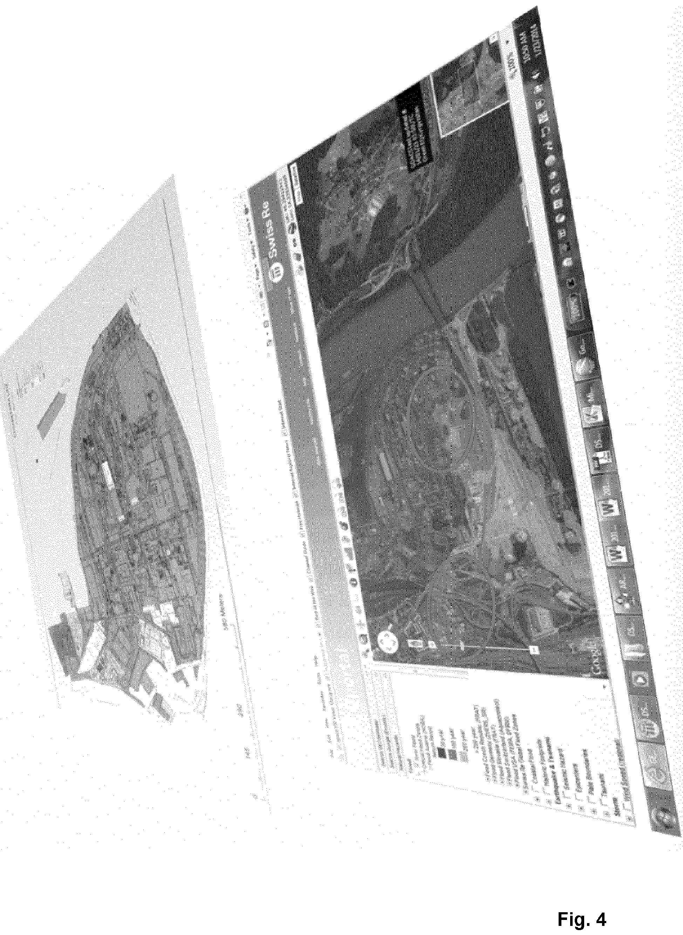

In Figure 4 shows an example of a presentation of information derived from a location digital twin on a display. The lower frame in Figure 4 shows a satellite image of a plant lay-out derived from a cloud based application such as GoogleEarth, BingMaps, etc. The lightly shaded areas indicate low-points showing potential focus areas for a flood events. The upper frame in Figure 4 shows a flood protection strategy as derived from measurement-based risk relevant data using for example CatNet. Different colors indicate for example different flood risk levels. The frames can be merged as layers on the display.

The digital platform and the method for automated risk analysis for a physical property asset according to the present invention is not only useful for risk-transfer and insurance purposes. They create value beyond risk transfer, and are attractive for other fields such as purchasing and procurement, investment, facility management, supply chain management and logistics, group sustainability, etc. By managing the user rights, the location digital twins can be presented in an anonymized form, which allows to create a high degree of value for platform user. Example: The user can see the average insured value per m² or the average m² of an entire portfolio located in a high hazard flood zone or the m² located in the event footprint (or even suing alerts in the foreseen future event footprint).

Once, the location digital twin is realized by means of the inventive digital platform 1, avatar measurements of temporally evolving risk-based real-world measuring parameters can be performed by the digital platform 1. The digital platform 1, at least partially realized as an automated, autonomous operating, electronic, digital cyber-physical production system, comprises at least one data-capturing device or measuring sensor 2 associated with a specific physical or intangible real-world asset 3,31/32 or living object 3,33 to be monitored. The data-capturing devices and/or measuring sensors 2, in particular, can comprise loT sensory and digital sensory networks with appropriate controls, sensors and other devices that make up the digital sensory network. Such sensory network allow seamlessly collecting and communicating data to enable the inventive digital platform 1. Thus, the physical real-world asset 31/32 or object 33 that is to be twinned can e.g. be fitted with sensors and telematics or smart measuring devices that measures the desired parameters and forwards them to the connected digital platform 1. Sensory and tracking technology may create real-time streams of measuring data with a predictive potential. The appropriate wearables, trackers, smart home devices and other sensors can so create a constant stream of evolving data that allow to track the evolution of the twinned asset or object 3. Granular streams of data from the used sensory and tracking technology can e.g. be molded into a single digital twin representation 4 by using analytical capabilities of artificial intelligence and machine learning.

The digital twin representation 4 and the digital platform 1, respectively, is based on three technical core characteristics, namely (i) synchronization means for synchronization with the real world asset or object 3, (ii) active data measuring and acquisition from the real environment and/or the real world asset or object 3 and forecast and simulation means giving or forecasting the internal and/or external development of the measuring parameters associated with the twinned system 3 and/or providing the status and/or emerging risk measures associated with the twinned system 3. In addition and at least as an embodiment variant, the digital twin is realized as an intelligent digital twin, wherein the digital platform 1 and/or the digital twin representation include the characteristics of artificial intelligence or other machine learning structures. To realize the proposed architecture for the digital platform 1, several techniques, e.g. Anchor-Point method, methods for heterogeneous data acquisition and data integration or agent-based method for the development of a co-simulation between different digital twin representation, especially for the digital risk twin part, can be implemented. As mentioned above, the digital platform is realized at least partially, as a cyber-physical system, i.e. as an integration of sensor and measuring technology, digital data and cyber methods with physical processes. Embedded computers and networks monitor and control the physical processes, usually with feedback loops, where physical processes affect computations and vice versa.

According to the present invention, the digital twin 4 is a victual representation of a physical asset of object 3 in the digital platform 1, i.e. in the cyber-physical production system, enabled of mirroring its static and dynamic characteristics within certain environmental conditions, i.e. condition parameter settings. The digital platform contains and maps various digital modules to each physical assets or objects 3, of which some are executable, as e.g. simulation or forecast modules. However, not all module are executable, which technically, inter alia, means that the digital twin representation according to the present invention is more than just a simulation of a physical asset or object 3. According to the invention, an asset or object 3 can be an entity that already exists in the real world or can be a representation of a future entity that will be constructed or still have to be born. It is important to understand, that the digital twin representation 4 of the present invention can be realized a composite of many individual digital twin representations 4. These digital twin representations 4 communicate with each other by means of the digital platform 1 and are enabled exchange data and information. A digital twin representation 4 of the digital platform 1 can simulate and test various scenarios for reconfiguration of the digital platform 1, such as reliability, energy consumption, process consistency, ergonomics, logistics, virtual commissioning, etc. The different simulation modules interacting with each other, form a co-simulation of the entire system and show the characteristics of the digital platform 1 e. g., the behavior, function, etc. By reconfiguration is meant a modification of parts of an already existing and operating digital platform 1 to meet new requirements, typically arising or emerging from the stream of sensory data measured in the real-world of the physical twin 3 in order to achieve convergence in the parallel development. It is important to understand, that the digital platform 1 as a cyber-physical production system is neither a purely physical object nor a purely virtual object, since its virtual digital core, i.e. the digital twin structure 4 only exist in its dependency to the real-world, physical object 3 and its constant link and sensory data streaming connection to the real-world physical object 3, connecting the digital twin 4 to the twinned real-world object 3 like an unborn child to its mother through the live-spending umbilical cord.

The digital platform 1 comprises a data store 10 with stored modular digital assets/objects elements 101,...,105 each representing a plurality of subsystems 41 of the real-world asset or object 3 for the assembly of a digital twin representation 4 of the physical or intangible real-world assets or living objects 3. The data store 10 can be realized as an electronic repository for persistently storing and managing collections of data which include not just repositories like databases, but also simpler store types such as simple files, etc. The data store can accommodate data in any known formats and data structures and in various formats and data structures at the same time. Thus, the data store is more than a library since it can technically represent a "data lake" or a "data ocean". Under databases, it is understood herein a series of bytes that is managed by a database management system (DBMS), while a file is understood as a series of bytes that is managed by a file system. Thus, any database or file is a series of bytes that, once stored, can constitute a data store 10, as referred herein. As such, the data store 10 technically provides the basis to hold and abstract and collections of constructive data inside the respective digital platform 1 to build up the digital twin representation 4. The data store 10 can also comprise data lake repositories or data ocean repositories of data holding data in its natural/raw format, e.g. object BLOBs (Binary Large OBject) or files, where a BLOB is understood herein as a collection of binary data stored as a single entity in a database management system. BLOBs can comprise images, audio or other any multimedia objects, or even binary executable code stored as a blob. The modular digital assets or objects elements 101,...,105 are selected and assembled to said digital twin representation 4 from the data store 10 based on captured structural 421, operational 422 and/or environmental 423 property parameters 42 by means of the digital platform 1.

The invention provides the technical structure for making measurements and/or measurement-based predictions regarding the operation or status of a real world physical system 3, such as constructions or industrial plants, e.g. comprising electro-mechanical system. However, the present system can be even applied to living objects 3, e.g. human being with health condition with only minor adaptions. The predicted measures may, inter alia, be based on aging process modelling structures. For example, it may be helpful to predict the remaining life of a technical system, such as an aircraft engine or a mill plant, to help plan when the system should be replaced or when a certain risk measure for a possible loss exceeds a certain threshold value. An expected lifetime or risk measure of a system may be estimated by a prediction or forecast process involving the probabilities of failure of the system's individual components, the individual components having their own reliability measures and distributions, or the probability of an impact of an occurring risk event.

Digital models and modelling executables contain a digital representation of dynamic processes affecting the asset or object or elements of the asset/object, thereby providing its development to future timeframes. It can be distinguished between digital knowledge models (representing the current understanding about relationship of things in the real world. They are often described as digital knowledge graphs, digital risk models (hazard models, rating models, pricing and price development models, etc.) and machine learning model modules that can help to detect non-linear patterns in data to extrapolate the ability to predict outcomes. Having involved a plurality of measuring devices and sensors, the present system is able to constantly or periodically monitor and trigger multiple components of a system, real-world asset or living object 3, each having its own micro-characteristics and not just average measures of a plurality of components, e.g. associated with a production run or slot. Moreover, it may be possible to very accurately monitor and continually assess the health of individual technical components of the physical real-world asset 31/32 or parts of the body of the living object 33, predict their error-proneness, vulnerability, health-status or remaining live-time, and consequently assess and forecast health measures, health risk measures and remaining lifetime. Thus, the system provides a significant advance for example for applied prognostics and risk measuring. It further provides the technical basis for discovering and monitor real-world assets and objects 3 in an accurate and efficient manner allowing, inter alia, to precisely trigger risk measures, or in the context of production systems to reduce unplanned, losses, break downs or at least the associated down time for complex systems. The inventive system 1 also allows to achieve a nearly optimal control of a twined physical system if the relevant sensory data can by measures and assessed, if the life of the parts and degradation of the key components can be accurately determined or, in case of living objects 33, if the health status and condition of the relevant organs can be correctly measured. According to the present invention, these forecast measures are provided by a digital twin 4, in particular a digital risk twin, of a twinned physical system 3.

By means of the at least one input device or sensor 2 associated with the twinned physical asset or object 3, structural 431, operational 432 and/or environmental 433 status parameters 43 of the real-world asset or object 3 are measured and transmitted to the digital platform 1. The status parameters 43 are assigned to the digital twin representation 4, wherein the values of the status parameters 43 associated with the digital twin representation 4 are dynamically monitored and adapted based on the transmitted parameters 43, and wherein the digital twin representation 4 comprises data structures 44 representing states 441 of each of the plurality of subsystems 41 of the real-world asset or object 3 holding the parameter values as a time series of a time period.

As already discussed, some embodiments can e.g. be directed to an Internet of Things associate to facilitate implementation of a digital twin of a twinned physical system. For these variants, the loT associate may include a communication port to communicate with at least one component, the at least one component comprising a sensor 2 or an actuator associated with the twinned physical system 3, and a gateway to exchange information via the loT. The digital platform 1 and local data storage, coupled to the communication port and gateway, may receive the digital twin 4 from the data store via the loT. The digital platform 1 may be programmed to, for at least a selected portion or subsystem 34 of the twinned physical system 3, execute the digital twin 4 in connection with the at least one component and operation of the twinned physical system 3.

The structural and/or operational and/or environmental status parameters 43 can e.g. comprise endogen parameters, whose values are determined by the real-world asset or object, and/or exogen parameters, whose values origin from and are determined outside the real-world asset or object and are imposed on the real-world asset or object. The digital platform 1 can e.g. comprise associated exteroceptive sensors or measuring devices for sensing exogen environmental parameters physically impacting the real-world asset or object and proprioceptive sensors or measuring devices for sensing endogen operating or status parameters of the real-world asset or object. The sensors or measuring devices can e.g. comprise interfaces for setting one or more wireless or wired connections between the digital platform 1 and the sensors or measuring devices 2, wherein data links are settable by means of the wireless or wired connections between the digital platform 1 and the sensors or measuring devices 2 associated with the real-world asset or object 3 transmitting the exogen and endogen parameters measured and/or captured by the sensors or measuring devices 2 to the digital platform 1.

By means of the digital platform 1, data structures 44 for the digital twin representation 4 representing future states 441 of each of the plurality of subsystems 41 of the real-world asset or object 3 are generated as value time series over a future time period based on an application of simulations using cumulative damage modelling processing, the cumulative damage modelling generating the effect of the operational and/or environmental asset or object parameters on the twinned real-world asset or object 3 of the future time period. Modelling and appropriate parameter value processing, as understood herein, technically contain a digitized, formalized representation of the known time-related influences and damage mechanisms. Concerning the digital engineering, the cumulative damage modelling can comprise digital knowledge modelling for the knowledge engineering, time-dependent risk modelling and machine learning modelling that are able to detect non-linear patterns in data to extrapolate the ability to predict outcomes, where the digital knowledge models represent and capture the relationship of the objects in the real world, e.g. described as knowledge graphs. Knowledge graphs are structured knowledge in a graphical representation, which can be used for a variety of information processing and management tasks such as: (i) enhanced (semantic) processing such as search, browsing, personalization, recommendation, advertisement, and summarization, 2) improving integration of data, including data of diverse modalities and from diverse sources, 3) empowering ML and NLP techniques, and 4) improve automation and support intelligent human-like behavior and activities that may involve robots. For example, for a micromechanical device, a micromechanics modelling can be used that includes the internal and external effects on the device can be used in a cumulative damage scheme to predict the time-dependent fatigue behavior. Parameters can be used to model the degradation of the device under fatigue loading. A rate equation that describes the changes in efficiency as a function of time cycles can be provided using experimentally determined reduction data. The influence of efficiency parameters on the strength can be assessed using a micromechanics model. The effect of damage probability measures on the device can be provided by solving a boundary value problem associated with the particular damage mode (e.g. transverse matrix cracking). Predictions from such technical modelling can be backchecked and compared with experimental data, e.g. if the predicted fatigue life and failure modes of the device agree very well with the experimental data. The modelling of the present invention (especially machine learning and risk modelling, i.e. modelling of probability measures of future occurring events) leverage time-series data in order to build a view from the past that can be projected towards the future.

All mentioned prediction and modelling modules (especially risk-based and/or machine learning) leverage timeseries data in order to build a view from the past that can be projected towards the future. This also applies to establish frequency and severity measures of events that can be used for risk-based purposes. A risk measure or risk-exposure measure is understood herein as the physically measurable probability measure for the occurrence of a predefined event or development. As mentioned, historical measuring data are also fundamentals to establish frequency and severity of events that can be used for risk measures. Historical data can be used in all areas, like general dimensions (e.g. measuring weather, GDPs (Gross Domestic Products), risk events) as well as more risk-transfer related (e.g. measuring economic losses, insured losses). In the above example of the micromechanical device, the historical data can, inter alia, also be weighted by experimental step-stress test data to verify the cumulative exposure/damage modelling structure.

By means of the digital platform 1, the digital twin representation 4 is analyzed providing a measure for a future state or operation of the twinned real-world asset or object 3 based on the generated value time series of values over said future time period, the measure being related to the probability of the occurrence of a predefined event to the real-world asset or object 3. The digital twin 4 of twinned physical system 3 can, according to some embodiments, access the data store, and utilize a probabilistic structure creation unit to automatically create a predictive structure that may be used by digital twin modeling processing to create the predictive risk/occurrence probability measure.

To process the generated effects captured and measured by physical measuring parameters to the operational and/or environmental asset parameters on the twinned real-world asset 3 of the future time period, the cumulative damage modelling by machine learning modules further can comprise the step of detecting first anormal or significant effects within a generated and measured time series of parameters, wherein the detection of anomaly and significant events is triggered by exceeding the measured deviation from a defined threshold value per a single or set of operational and/or environmental asset parameters.

The system detects second anomaly and significant events based on the time series of the defining the status of operation of the digital twin. By means of dynamic time normalization the topological distance between the measured time series of the parameters over a time is determined as a distance matrix. The dynamic time normalization can be realized e.g. based on Dynamic Time Wrapping. A measured time series signal of the event rates can be matched e.g. as spectral or cepstral value tuples with other value tuples of measured time series signal of the event rates. The value tuples can be supplemented, for example, with further measurement parameters such as one or more of the present digital twin parameters and/or environmental parameters discussed above. Using a weighting for the individual parameters of each measured value tuple, a difference measure between any two values of the two signals is established, for example a normalized Euclidean distance or the Mahalanobis distance. The system searches for the most favorable path from the beginning to the end of both signals via the spanned distance matrix of the pairwise distances of all points of both signals. This can be done e.g. dynamic efficient. The actual path, i.e. the wrapping, is generated by backtracking after the first pass of the dynamic time normalization. For the pure determination, i.e. the corresponding template selection, the simple pass without backtracking is sufficient. The backtracking, however, allows an exact mapping of each point of one signal to one or more points of the respective other signal and thus represents the approximate time distortion. It should be added that in the present case, due to algorithmic causes in the extraction of the signal parameters of the value tuples, the optimal path through the signal difference matrix may not necessarily correspond to the actual time distortion.

By means of a statistical data mining unit of the system, the measured and dynamically time-normalized time series are then clustered into disjoint clusters based on the measured distance matrix (cluster analysis), whereby measured time series of a first cluster index a virtual twin operation or status in a norm range and measured time series of a second cluster index a virtual twin operation or status outside the norm range. Clustering, i.e. cluster analyses, can thus be used to assign similarity structures in the measured time series, whereby the groups of similar measured time series found in this way are referred to here as clusters and the group assignment as clustering. The clustering by means of the system is done here by means of data mining, where new cluster areas can also be found by using data mining. The automation of the statistical data mining unit for the clustering of the distance matrix can be realized e.g. based on density based spatial cluster analysis processing with noise, in particular the density based spatial cluster analysis with noise can be realized based on DBScan. DBScan as spatial cluster analysis with noise works density based and is able to detect multiple clusters. Noise points are ignored and returned separately.

As a pre-processing step, e.g. pre-processing, a dimensionality reduction of the time series can be performed. In general, the analysis data described above are composed of a large number of different time series, e.g. with a sampling rate of up to 500ms or more, if required by the dynamics of the twinned system/asset/living object. Here, each variable can be divided into two types of time series, for example: (1) Timesliced time series, when the time series can be naturally divided into smaller pieces when a process or dynamic of a twinned system is over (e.g., operational cycles, day time cycles etc.); and (2) Continuous time series: When the time series cannot be split in an obvious way and processing must be done on it (e.g., sliding window, arbitrary splitting, ...). In addition, time series can also be univariate or multivariate: (1) Univariate time series: the observed process is composed of only one measurable series of observations (e.g. structural parameters of the twinned object); (2) Multivariate time series: The observed process is composed of two or more measurable series of observations that could be correlated (e.g., structural parameters and condition/state of the twinned object or an element of the twinned object).

The use of time series for processing steps of the system presents a technical challenge, especially if the time series are of different lengths (e.g., operational parameter/environmental measuring parameter time series). In the context of the inventive system, it may therefore be technically advantageous to preprocess these time series into a more directly usable technical format using preprocessing. Using the dimensionality reduction method, a latent space can be derived from a set of time series. This latent space can be realized as a multidimensional space containing features that encode meaningful or technically relevant properties of a high-dimensional data set. Technical applications of this concept can be found in natural language processing (NLP) methods with the creation of a word embedding space derived from text data or, in the present case, a time series embedding space, or in image processing, where a convolutional neural network encodes higher-order features of images (edges, colors ...) in its final layers. According to the invention, this can be technically realized by creating a latent space of several time series from replay data and using this latent space as a basis for subsequent tasks such as event detection, classification or regression tasks. In the present case, a latent space can be generated for time series signals with technical approaches such as principal component analysis and dynamic time wrapping, and also with deep learning-based technical approaches similar to those used for computer vision and NLP tasks, such as autoencoders and recurrent neural networks.

Regarding the generation of the time series embedding space, the fundamental technical problem that complicates the technical modeling and other learning problems in the present case is dimensionality. A time series or sequence on which the model structure is to be tested is likely to be different from any time series sequence seen during training. Technically, possible approaches may be based, for example, on n-grams that obtain generalization by concatenating very short overlapping sequences seen in the training set. In the present case, however, the dimensionality problem is combated by learning a distributed representation for words that allows each training set to inform the model about an exponential number of semantically adjacent sentences. The modelling simultaneously learns (1) a distributed representation for each time series along with (2) the likelihood function for time series sequences expressed in terms of these representations. Generalization is achieved by giving a sequence of time series that has never been recognized before a high probability if it consists of time series that are similar (in the sense of a close representation) to time series that form a set that has already been seen. Training such large models (with millions of parameters) within a reasonable time can itself be a technical challenge. As a solution for the present case, neural networks are used, which can be used e.g. for the likelihood function. On two time series sets it could be shown that the approach used here provides significantly better results compared to state-of-the-art n-gram models, and that the proposed approach allows to use longer time series and time series contexts.

In the present case, the ability of multilayer backpropagation networks to learn complex, high-dimensional, nonlinear mappings from large collections of examples makes these neural networks, particularly Convolutional Neural Networks, technical candidates for the time series recognition tasks. However, there are technical problems for application in the present invention: In the technical structures for pattern recognition, typically a manually designed feature extractor collects relevant information from the input and eliminates irrelevant variability. A trainable classifier then categorizes the resulting feature vectors (or strings) into classes. In this scheme, standard, fully connected multilayer networks can be used as classifiers. A potentially more interesting scheme is to eliminate the feature extractor, feed the mesh with "raw" inputs (e.g., normalized images), and rely on backpropagation to turn the first few layers into a suitable feature extractor. While this can be done with an ordinary fully connected feed-forward network with some success for the task of detecting the time series, there are technical issues in the present context. First, time series of measurement parameters can be very large. A fully linked first layer, e.g., with a few hundred hidden units, would therefore already require several 10'000 weights. An overfitting problem occurs if not enough training data is available. Also the technical requirements for the storage medium grow enormously with such numbers. However, the technical skin problem is that these networks have no inherent invariance with respect to local biases in the input time series. That is, the pre-processing discussed above with the appropriate normalization or other time normalization must normalize and center the time series. Technically, on the other hand, no such pre-processing is perfect.

Second, a technical problem of fully linked networks is that the topology of the input time series is completely ignored. The input time series can be applied to the network in any order without affecting the training. However, in the present case, the processing process has a strong local 2D structure, and the time series of measurement parameters have a strong 1D structure, i.e., measurement parameters which are temporally adjacent are highly correlated. Local correlations are the reason that extracting and combining local features of the time series before recognizing the spatial or temporal objects is proposed in the context of the invention. Convolutional neural networks thereby enforce the extraction of local features by restricting the receptive field of hidden units to local units. In the present case, the use of Convolutional Networks technically ensures in the recognition of the time series that displacement and depletion invariance is achieved, namely through the application of local receptive fields, joint weights (or weight replications), and temporal subsampling of the time series. The input layer of the networks thereby receives time series that are approximately time-normalized and centered (see Time Wrapping above).

For generating the latent space for the time series signals, as described above, e.g. principal component analysis and dynamic time wrapping or deep learning based technical approaches can be chosen, such as the use of recurrent neural networks. However, in the present invention, it should be noted that learning information over longer time intervals using recurrent backpropagation can take a very long time, usually due to insufficient decaying error feedback. Therefore, in the context of the invention, the use of a new, efficient and gradient-based method. Here, the gradient is truncated where it does no harm so that the network can learn to bridge minimal time delays of more than 1000 discrete time steps by enforcing a constant error flow through constant rotations of the errors within a specific unit. Multiplicative gate units thereby learn to open and close access to the constant error flow. By this embodiment according to the invention, the network remains local in space and time with respect to learning the time series.

With respect to an autoencoder embodiment, the network is trained in an unsupervised manner (unsupervised learning) so that the input signal can first be converted to low-dimensional latent space and reconstructed by the decoder with minimal information loss. The method can be used to convert high-dimensional time series into low-dimensional ones by training a multi-layer neural network with a small central layer to reconstruct the high-dimensional input vectors. Gradient descent can be used to fine-tune the weights in such "autoencoder" networks. However, this only works well if the initial weights are close to a suitable solution. In learning the time series, the embodiment described here provides an effective way of initializing the weights that allows the autoencoder network to learn low-dimensional codes that perform better than principal component analysis as a tool for reducing the dimensionality of data. Dimensionality reduction of time series according to the invention facilitates classification, visualization, communication, and storage of high-dimensional time series. One possible method is principal component analysis (PCA), which finds the directions of greatest variance in the time series and represents each data point by its coordinates along each of these directions. For example, as an embodiment variant, a nonlinear generalization of PCA can be used by using an adaptive multilayer "encoder" network to transform high-dimensional time series into low-dimensional codes, and a similar decoder network to recover the time series from the codes. In the embodiment, starting from random weights in the two networks, they can be trained together by minimizing the discrepancy between the original time series and their reconstruction. The system obtains the required gradients by applying a chain rule to propagate the error derivatives back first through the decoder network and then through the encoder network. This system is referred to here as an autoencoder.

The above-discussed unsupervised machine learning procedure for dynamic time-wrapping based (DTW) time series detection, can also be done supervised. Two execution variants of learning strategies, supervised and unsupervised, can be applied with the DTW for the time series according to the invention. For example, two supervised learning methods, incremental learning and learning with priority denial, can be distinguished as execution variants. The incremental learning procedure is conceptually simple, but typically requires a large set of time series for matching. The learning procedure with priority denial can effectively reduce the matching time, while typically slightly decreasing the recognition accuracy. For the execution variant of unsupervised learning, in addition to the variant discussed above, an automatic learning approach based on most-matching learning and based on learning with priority and rejection can also be used, for example. The most-matching learning revealed here can be used to intelligently select the appropriate time series for system learning. The effectiveness and efficiency of all three machine learning approaches for DTW just proposed can be demonstrated using appropriate time series detection test.

In case of detecting first and/or second anomaly and significant events associated with a digital twin respectively with the twinned object/asset, the measured event dynamics or statuses are transmitted as a function of time as input data patterns to a machine-learning unit and the measuring parameters of the digital twin are adjusted by means of the electronic system control based on the output values of the machine-learning unit, wherein the machine-learning unit classifies the input patterns on the basis of learned patterns and generates corresponding metering parameters. By additionally measuring structural/operational parameters comprising measurement parameters for detecting physical properties of the twinned asset/object by means of measuring devices, and/or asset/object parameters by means of proprioceptive sensors or measuring devices, and/or environmental parameters by means of exteroceptive sensors or measuring devices at least comprising air humidity and/or air pressure and/or ambient temperature and/or local temperature distributions, e.g., the machine-learning unit can be adapted to the input patterns on the basis of the measured time series data. e.g., in addition to the measured time series of dynamics/statuses, one or more of the asset/object operational parameters and/or the structural parameters and/or the environmental parameters can be transmitted as a function of time to the machine-learning unit as an input data pattern. The machine-learning unit may be implemented, for example, based on static or adaptive fuzzy logic systems and/or supervised or unsupervised neural networks and/or fuzzy neural networks and/or genetic algorithm-based systems. The machine-learning unit may comprise, for example, Naive Bayes classifiers as a machine-learning structure. The machine-learning unit may be implemented, for example, based on supervised learning structures comprising Logistic Regression and/or Decision Trees and/or Support Vector Machine(SVM) and/or Linear Regression as machine-learning structure. For example, the machine-learning unit may be realized based on unsupervised learning structures comprising K-means clustering or K-nearest neighbor and/or dimensionality reduction and/or association rule learning. The machine-learning unit may be realized, for example, based on reinforcement learning structures comprising Q-learning. For example, the machine-learning unit may be implemented based on ensemble learning comprising bagging (bootstrap aggregating) and/or boosting and/or random forest and/or stacking. Finally, the machine-learning unit can be realized based on neural network structures comprising feedforward networks and/or Hopfield networks and/or convolutional neural networks or deep convolutional neural networks.

As used herein, the term "automatically" may refer to, for example, actions that can be performed with little or no human intervention. As further used herein, devices, including those associated with the digital platform 1 may exchange information via any communication network which may be one or more of a Local Area Network ("LAN"), a Metropolitan Area Network ("MAN"), a Wide Area Network ("WAN"), a proprietary network, a Public Switched Telephone Network ("PSTN"), a Wireless Application Protocol ("WAP") network, a Bluetooth network a wireless LAN network, and/or an Internet Protocol ("IP") network such as the Internet, an intranet, or an extranet. Note that any devices described herein may communicate via one or more such communication networks. The digital risk twin 4 of the twinned physical system 3 can e.g. store information into and/or retrieve information from various data sources, such as the sensors 2, the data store etc.. The various data sources may be locally stored or reside remote from the digital twin 4 of the twinned physical system 3.

By means of the digital platform 1, the control of an operation or status of the real world asset or object 3 can be optimized or adjusted to predefined operational and/or status asset or object parameters of the specific real-world asset or object 3 based on the provided measure for a future state or operation of the twinned real-world asset or object 3 and/or based on the generated value time series of values over said future time period. In case of an optimized control of operation, the optimized control of operation is generated to jointly and severally increase the specific operating performance criteria in time and future of the real-world asset or object or decrease a measure for an occurrence probability associated with the operation or status of the real-world asset or object within a specified probability range. The decrease of the measure for an occurrence probability associated with the operation or status of the real-world asset or object 3 can e.g. be based on a transfer of risk to an automated risk-transfer system controlled by the digital platform, wherein values of parameters characterizing the transfer of risk are optimized based on said measure for a future state or operation of the twinned real-world asset or object 3 and/or based on the generated value time series of values over said future time period. In order to optimize the status of the real-world asset or object 3 or the probability of an occurrence of a predefined risk event, an optimizing adjustment of at least a subsystem 34 of the real-world asset of object 3 can e.g. be triggered by means of the digital platform 1. The triggering by means of the digital platform 1 can e.g. be performed by electronic signal transfer.

As variant, the digital twin 4 of the twinned physical system 3, i.e. the digital virtual replicas are constantly updated and analyzed by measuring data from their real counterparts, i.e. the twinned physical system or object 3 and from the physical environment that surrounds them in their real physical world. The digital platform 1 is able to react on the digital twin 4 and it can run analysis related to historical data, current data and forecasts. It is able to predict what will happen in each case and the associated risk, and thus be able automatically propose actions and provide appropriate signaling. Even the virtual twin itself or the digital platform 1, respectively, can act, when technically realized as such, on the technical means of its real-world twin 3, given that the two are linked by appropriate technical means. For example, by electronically sensing and triggering the occurrence of one or more specified threshold values emerging from or otherwise popping up at the digital twin 4 by means of a trigger or control module of the digital platform 1, electronic signaling can be generated by means of a signaling module and a data-transmission interface of digital platform 1, which is transmitted over a data-transmission network to the corresponding technical means or a PLC (Programmable Logic Controller) steering the corresponding technical means of the digital twin 4. In this case, the digital platform 1 is connected via the data-transmission network, which can include a land-based and/or air-based wired or wireless network; e.g., the Internet, a GSM network (Global System for Mobile Communication), an UMTS network (Universal Mobile Telecommunications System) and/or a WLAN (Wireless Local Region Network), and/or dedicated point-to-point communication lines. As the measuring sensors at the real-world asset or object 3, the corresponding technical means can be connected to the digital platform by telematics devices, allowing a continuous monitoring and control of the real-world twin 3. The corresponding technical means of the real-world twin 3 can e.g. comprise switches (e.g. on/off switches) activating or deactivating the associated technical means or the operation of the real-world asset or object 3 to prevent damage or loss at the real-world asset or object 3. In case of a living real-world object 3, the corresponding technical means can e.g. comprise electronic alarm means signaling an imminent occurrence of a damage or loss event to the living object 3 or emergency systems, as e.g. a heart attack or stroke. The PLCs, as mentioned above, are enabled to electronically control and steer appropriate technical means of the real-world asset or object 3 and can range from small modular devices with tens of inputs and outputs (I/O), in a housing integral with the processor, to large rack-mounted modular devices with a count of thousands of I/O, and which are often networked to other PLC and SCADA (Supervisory Control And Data Acquisition) systems. The PLCs can be designed for multiple arrangements of digital and analog I/O, extended temperature ranges, immunity to electrical noise, and resistance to vibration and impact. Executable program codes to control a possible machine operation at the real-world asset 3 can e.g. be stored in battery-backed-up or non-volatile memory.

The present invention has inter alia the advantage, that the digital platform 1 is consolidated in Industry 4.0 technology, especially providing new technical advantages in the automation of risk-transfer and insurance technology, in particular automated risk control and management systems. For example in the case of automated means for risk-transfer in the context of associated vehicles or houses, their nowadays increasing hyper-connection will contribute to the construction of the digital twins 4 by means the digital platform 1, so that the platform 1 provides new technical ways to generate predictive modelling and offer automated personalized services. Especially, if the subject of the risk-transfer is not a real-world asset 3 but a living object 3, that brings a degree of complexity, where trying to forecast and predict human factors will always involve a considerable margin of error, and the inventive digital platform 1 is able to solve by means of the digital risk twins challenge in the risk-transfer technology, where prior art systems are not able to cope with. As an increasing amount of personal data are generated e.g. through smartphones, fit-bits or other devices e.g. in smart homes, for example, prior art systems are, despite the availability of more and more data, not able to make them coherent and to translate them into probable behavior (and its associated risk measures). Thus, the inventive system 1 is able to play a key role that allows a more direct and personalized relationship with the living object 3 (i.e. the risk-transfer client) and is able to provide a critical technical role as new intermediary between data providers and risk-transfer systems, specialized in interpreting the accumulating big data of risk-transfer customers by linking it to the generation of appropriate digital twins 4.

As an embodiment variant, based on the measure for a future state or operation of the twinned real-world asset or object, a forecasted measure of an occurrence probability of one or more predefined risk events impacting the real-world asset or object 3 can e.g. be generated by propagating the parameters of the digital twin representation 4 in controlled time series. As a further embodiment variant, the digital platform can e.g. comprise and trigger an automated expert system of the digital platform 1 by means of electronic signal transfer, wherein the digital platform 1 triggers the transmission of a digital recommendation to a user interface generated by the expert system of the digital platform based on the measured value of the measure for a future state or operation of the twinned real-world asset or object and/or the measured probability of the occurrence of a predefined physical event to the real-world asset or object 3, The digital recommendation comprises indications for an optimization of the real-world asset or object 3 or adaption of the structural, operational and/or environmental status parameters.

Figures 17 and 18 show a more detailed schematic representation of the structure of a location digital risk twin 4, in particular the digital asset/object replica 48, the digital twin 47, the digital ecosystem replica 46, the digital risk robot 46 and the digital twin 4 with its optional artificial intelligence 45 of a physical entity 3 in the inventive digital platform 1. In the digital platform 1 and digital risk twin 4, respectively, each physical asset/object 3 consists of its digital modelling structures 481, 482, 483,..., 48i and associated data and its digital modelling structures 461, 462, 463,..., 46i and associated data. The digital twin 47 with the digital asset/object replica 48 is realized as a continuously updated, digital structure hold by the digital platform 1 that contains a comprehensive physical and functional description of a component or system throughout the life cycle. As such, the digital risk twin 4 provides a realistic equivalent digital representation of a physical asset or object 3, i.e. a technical avatar, which is always in synch with it. It allows to run a simulation on the digital representation to analyze the behavior of the physical asset. Additionally, each digital risk twin 4 of the digital platform 1 can comprise a unique ID to identify a digital risk twin 4, a version management system to keep track of changes made on the digital risk twin 4 during its life cycle, as already describe above, interfaces between the digital risk twins 4 for co-simulation and inter-twin data exchange, interfaces within the digital platform, in which the digital risk twins 4 are executed an/or held, and interface to other digital risk twin for co-simulation. Further aspects of a digital risk twin 4 relate to the internal structure and content, possible APIs and usage, integration, and runtime environment. The aspect of APIs and usage relate to the possible requirements for interfaces of the digital risk twin 4, in particular such as cloud-to-device communication or access authorization to information of the digital risk twin 4. For such integration the system 1 comprises an identification mechanism for unambiguous identification of the real asset/object 3, a mechanisms for identifying new real assets/objects 3, linking them to their digital risk twin 4, and synchronizing the digital risk twin 4 respectively its twinned subsystems with the real asset/object 3, and finally technical means for combining several digital risk twin subsystems into a digital risk twin 4. The ID provides the technical identification of a unique digital risk twin 4 with a real-world asset/object. With the help of this unique ID, the data and modelling structures of the digital risk twin 4 are stored as a module on a database containing all data and information and can be called any time during engineering or reconfiguration. This obviously supports modularity in the context of modular system engineering. A digital risk twin 4 provides the means to encapsulate the subsystems of a real-world asset/object 4. For example, CAD models, electrical schematic models, software models, functional models as well as simulation models etc. Each of these models can e.g. be created by specific means during the engineering process of a digital risk twin 4. An important feature are the interfaces between these means and their models. Tool interfaces can be used to provide interaction between modelling structures. For example, the modelling structures can be updated or reversioned during the entire life cycle or domain-specifically simulated with the aid of different inputs. The digital risk twin 4 of a real-world asset/object 3 should not only contain current modelling structures, but also all generated modelling structures during the entire lifecycle. This, for example, can support efficient engineering during reconfiguration and expandability throughout the lifecycle. Digital risk twin 4 time-series management provides access to all stored versions of the modelling structures and their relations. This allows the old version to be called up any time at the request of an engineer, taking into account the circumstances during engineering or reconfiguration, and to switch to the current version. As describe above, in order to accurately reflect the behavior and current state of the real-world asset/object 3, the digital risk twin 4 must contain current operation data of the asset/object 3. This can be sensor data, which are continuously streamed and recorded, as well as control data, which determines the current status of the real component, also recorded over the entire lifecycle. Finally, as a variant, a co-simulation interface for communication with other digital risk twins 4 can be provided to obtain more precise image of reality. For example, a data exchange can enable multidisciplinary co-simulation in the digital platform 1. This can be used to simulate the process flow of the entire system 1 in the real world.

As discussed above, the digital risk twin 4 can comprise an artificial intelligence layer 41. Such an intelligent digital risk twin 4 rises the system 1 to a complete autonomous level compared to the digital risk robot 45 in the digital platform 1. This allows the digital platform 1 and the digital risk twin 4 to cope with the streaming data amount coming from the measuring devices of the real-world asset/object 3, which can comprise, for example telematic devices of smart homes or smart cities or cars, in particular autonomous car system, in case of a real-world asset 31/32, or in case of a living object, as a human, wearable devices measuring body-related parameters. It is to be noted, that the digital platform 1 may comprise different digital risk twins related to different aspects of a user's life, as e.g. an loT-based smart-home digital risk twin 4, a telematic-based vehicle digital risk twin 4, and/or a telematic-based body risk twin 4, enabling the system 1 to measure and trigger extended and/or combined risk exposure measures of a certain user. In the context of smart-homes, smart-cities, interconnected cars and the like, interoperability can be achieved either by adopting universal standards for a communication protocol or by using a specialized device in the network that acts like an interpreter among the different measuring and sensory devices and protocols. The interoperability in the context of loT-based and/or telematics and/or smart wearable devices and big data solutions can so be achieved.

An intelligent digital risk twin 4, using the entire system's actual digital risk twin 45, can be used to realize processes such as optimization of the process flow, automatic control code generation for newly added real-world devices/assets/objects 3 in the context of plug and produce and predictive maintenance using stored operation data in the digital risk twin 4 throughout the lifecycle. To realize this, additional components are required to equip the digital risk twin 4 architecture with intelligence. As shown in fig. 3, for such additional components, being the digital replica layers 46/48 modelling comprehension, intelligent digital risk twin algorithms 41 and e.g. extra interfaces for communicating with the physical asset/object 3 are added to the architecture of the digital risk twin 4 to make it self-adaptive and intelligent.

To dynamically synchronize the digital risk twin 4 with the physical asset/object throughout the entire lifecycle of the twin 4, the digital platform 1 and the digital risk twin 4, respectively, comprise the technical means to understand and manage all modelling structures and data. Accordingly, the digital risk twin 4 modelling comprehension in the structure of figure 17 fulfills this purpose by storing information of the interdisciplinary modelling structures 46/48 within the digital risk twin 4 and its relations to other digital risk twins 4. The digital risk twin 4 modelling structure is realized with a standardized semantic description of modelling structures, data and processes for a uniform understanding within the digital risk twin 4 and between digital risk twins 4. Technologies to implement such a standardization can, for example, be OPC UA (OPC: Open Platform Communications, UA: Unified Architecture) or OWL (Web Ontology Language of the World Wide Web Consortiums (W3C)).

The autonomous, intelligent digital risk twin 4 comprises two important capabilities regarding the processing of acquired operation data. It applies appropriate algorithms on the data to conduct data analysis. The algorithms extract new knowledge from the data which can be used to refine the modelling structure of the digital risk twin 4 e. g., behavior modelling structures. Thus, the intelligent digital risk twin 4, as embodiment variant, can provide electronic assistance and appropriate signaling e.g. to a worker at a plant to optimize the production in various concerns. Further, a digital risk twin 4 incrementally improves its behavior and features and thus steadily optimize its behavior, as e.g. the mentioned signaling to the worker of the plant. Therefore, dependent on the type of the twinned real-world asset/object 3, the digital risk twin 4 can provide autonomous steering signaling and electronic assistance signaling for different use cases such as process flow, energy consumption, etc.

Concerning co-simulation of different digital risk twins 4, in case of industrial assets 31, an optimized combination and process chain between digital risk twins 4 can e.g. be realized by parameterizing the existing modelling structures in relation to other digital risk twins 4 in a co-simulation environment. Based on the results of this simulative environment, the intelligent digital risk twin 4 triggers a parametrization of physical assets 31. In another example, the time-dependent evolving structure of a digital risk twin 4 is e.g. used to optimize individual parameters of the real-world asset or object 3, i.e. to determine optimal real-world asset's or object's 3 parameters. For example, as a consequence, the amount of degraded products can be minimized leading to an increased quality of a concerned manufacturing process, as e.g. a milling process.

According to another embodiment variant, other artificial intelligence algorithms 41 deal with automated code generation, for example through service-oriented architecture approaches for real machines based on the new requirements. This allows approaches such as plug and process to be realized. Other intelligent algorithms 45 can e.g. provide a simulation-based diagnostic and prediction processing through data analysis and knowledge acquisition, for example in the context of desired predictive maintenance. Such machine-based intelligence 45 can e.g. comprise algorithms to product failure analysis and prediction, algorithms to optimization and update of process flow, algorithms for generating a new control program for the twinned real-world asset 31 based on new requests, algorithms for energy consumption analysis and forecast etc. As an embodiment example of autonomous analysis of a digital risk twin 4, an example for a production plant as real-world asset 31 is provided in the context of historical process data of such production plants to predict future maintenance intervals or to maximize the availability of the plant (i.e. predictive maintenance signaling). To extract a model from or find correlations within operation data, unsupervised learning techniques such as k-means clustering or auto encoder networks with LSTM cells can be applied on time series data. In case of k-means clustering with sliding windows, the learned time-sensitive cluster structure is used as model for the system behavior. This circumstance allows for instance the detection of anomalies and the prediction of failures. To do so, a distance metric that considers the current point in time is applied on a test data set of currently acquired data and the cluster centers of the trained model. Anomalies in the test data set are detected by defined time-dependent limit violations to the cluster centers as well as the emergence of new, previously non-existent clusters. Thus, the slinking emergence of failure can be predicted based on the frequency of anomaly occurrences and their intensity of deviation.

As a further embodiment example, the digital risk twin 4 can e.g. be applied to automated risk-transfer and risk exposure measuring systems. Also in this example, the digital representation of the risks related to a specific real world asset or object 3. The digital platform allows the generation of signaling giving a quantification measure of risks, e.g. with appropriate numbers and graphs. The digital platform 1 thus comprises automated risk assessment and measuring and risk scoring capabilities based on the measured risks, i.e. probability measures for the occurrence of a predefined risk event with an associated loss. The digital platform 1 is able to measure the risk impact on a much larger scale (i.e. engine > plant > supply chain) by means of the digital risk twin 4. The digital risk twin 4 has further the advantage that it can be completely digitally created/managed. It allows to extend the risk-transfer technology for risk based data services and provides an easy access to asset/object 3 related insights/analytics by means of the digital risk twin 4. Further, it allows to provide normalization of risk factors and values, as described above, and is easy to integrate in other processes/value chains.

The twinned real world entity can be a physical or intangible asset 31/32 or a living object 33, e.g. a human being 331 or an animal 332. The complete digital platform 1 can be used on digital twins (IoT) and appropriate data feeds. The digital platform 1 can e.g. be realized in the sense of a risk intelligence factory creating the digital risk twin 4 by applying a company's intelligence (risk, actuarial, Machine Learning, etc.) to data assets. In contrast to the digital twin 47, which uses data from IoT sensors, physical modelling structures of the real-world device/asset/object 3 providing time-dependent measures for the performance and/or status etc., the digital risk twin 45 captures and measures data from multiple sources comprising ecosystem measuring parameters and involves a risk modelling structure of the real-world asset/object 3 and the environment, which allow to effectively measure and trigger risk-related factors, as e.g. exposure measures or occurrence probabilities of risk-events or impact measures under the occurrence of a certain event with a certain strength or physical characteristic. Thus, it allows inter alia to effectively optimize and minimize risk impacts, respectively.

The recording of the analysis-measurement data, i.e. the stream of measuring parameters measured by the sensors and/or measuring devices associated with the twinned object/asset allows the realization of the replay function according to the invention (therefore the designation of the analysis-measurement data also as replay data; cf. above). The replay function is intended as a specific embodiment of the system according to the invention. It can be realized with and without the above discussed optimization function, i.e. with and without adjusting the digital twin parameters or with or without adjusting operational/structural/environmental parameters of the twinned object/asset by means of the electronic signaling system control based on the output values of the machine-learning unit. In principle, the recording of the analysis-measurement data can be triggered by the detection of a first and/or second event (e.g. detected by its anomaly or significance) of the time series. Such a replay embodiment with provision of analysis measurement data (as replay data) can e.g. monitor a time period in the replay mode of the digital twin and/or twinned object/asset. The analysis measurement data are recorded, for example, on a storage medium of a server (S). By means of an assembly (BG) comprising a client for time-shifted retrieval of analysis measurement data, a time-shifted to real-time section of the replay data is selected, e.g., by means of a time tag (time-based tagging) or an event area displayed by the system to the user for selection, and requested, e.g., by means of a request from server S. The server S provides the requested time section to the user. The latter compiles the requested time section of the replay data in the form of multimedia data packets and transmits them over the network to the client of the assembly. The client unpacks the multimedia data packets and displays them for the user on the monitor (M). The assembly with the client can be part of the server S, e.g. implemented as part of the system control, or as a network assembly which can access the server S or the system control with integrated server S via the network N. A time data set diagram highlighting a time range available for retrieval can e.g. be displayed to the user of system 1 e.g. including an event detected by the system 1. The entire real time analysis data stream can be recorded or only time ranges of the analysis data stream, i.e. the replay data, in which first and/or second events were detected by the system 1. An embodiment variant according to the invention can also be implemented in such a way that the user can jump to any point in time in the past of the recorded analysis data stream, i.e. independently of event detections. Also, the user can, e.g., time-delayed beyond a certain time range, retrieve the analysis measurement data from the stored replay data stream, jump forward (forward) or backward (rewind) one time range in the recorded data stream at a time x. Finally, the detected event time ranges can e.g. be displayed to the user for selection, e.g., via the client on the board. In particular, a further embodiment can be realized in such a way that the connected twinned object/asset respectively the digital twin, can be set again by the electronic system controller to the exact operating mode or status with the same measuring parameters as in the detected event area. The digital twin and/or the connected twinned asset/object can thus be run through the event area again in real time, e.g. for testing, optimization or other verification purposes.

As discussed above, e.g. the whole real-time analysis data stream can be recorded in digital format on the server S, or only the areas with detected, first and/or second events A through H. The server can e.g. also be provided centrally by a provider for the provision of this replay data lying in the past, whereby e.g. an operator of the system can access the server S by means of a secured assembly/computer with corresponding client. The recording is done in such a way that an event range A to H is stored either as a single file or in multiple files each representing an event sub-range. The number of recordings of the replay data areas and the resulting files may vary depending on the number of users who are to have subsequent access to them. Regardless, the number of records of the real-time analysis data stream (replay data streams) may depend on the recording and data delivery technology used. For example, these files, once recorded, may also be retrieved by means of a digital subscriber line or other uniquely assignable data transmission from the BG assembly or other designated receiver with a unique address and played back on a multimedia device MG, such as a monitor or computer. For example, the assembly BG may also be integrated into the corresponding device in the case of a mobile multimedia device, such as a cell phone, a PDA, a tablet PC. Immediately after the real-time recording of the replay data stream, the recorded ranges of the respective detected events or the respective time ranges or set time tags can be retrieved by the user.

At time t_{c} this event area is completely recorded on the server S and made available for its retrieval. Parts of this event area may already be retrievable immediately after the start of their recording and/or detection, provided they are in the past. The user selecting this event area receives this event area C in digital format displayed in real time on the monitor MG via the client of the assembly. Pausing, rewinding or forwarding (if a past portion of the replay data stream has been accessed) may also be possible for monitoring the replay data stream via the client. All following time ranges of the replay data stream run for the user then e.g. when pausing by the length of the pause, time-shifted to the real time replay data stream. It is of course possible for the user to jump back to the real time mode of monitoring the analysis data stream at any time. In this case, parts of the replay data stream are skipped again accordingly. For already detected event areas of the replay data stream, it is also possible to download the desired event area A-H as a file and then view it. However, the download time can be very time-consuming depending on the available bandwidth for data transfer. Furthermore, the download time can be significantly extended if additional event areas or the real-time stream are viewed/monitored at the same time. In general, the replay embodiment may be designed, for example, to use a new method for providing replay data via an assembly BG associated with a multimedia device MG having a corresponding client. The entire replay data stream is recorded on the server S. As an embodiment, also only the detected first and/or second event regions can be stored. Then the steps are performed: a) selecting, by means of the client supported by the assembly (BG), one or more event areas and/or time ranges and/or selectable time tags or time markers in the stored replay data stream at the multimedia device (MG); b) retrieving, based on the previous selection, one or more time ranges based on their unique identification (in terms of time or content (e.g. detected anomalies or replay data ranges filtered by means of a filter through entered characteristic parameters)). During the transmission also several multimedia data files could represent in each case an event/time range and their markings thereby in each case an unambiguously subrange-specific marking covers to the call of the server (S) on in each case the time/anomaly ranges (A to H) is stored; c) providing a time range of the recorded replay data stream stored in the data files at the multimedia device (MG) starting with the selected event range or sub-range with a time delay which is at least as large as the difference between the actual real-time analysis data stream and the selection time.

### List of reference signs

1 Automated Standardized Location Digital Twin / Digital Platform / Cloud Platform
   11 Persistence storage
      101,...,105 Modular Digital Assets/Objects Data Elements
   12 Data processing engine
      121 CatNet engine
   13 Framework structure
   14 Sensory data interface and data aggregation unit (Data receiving module)
   15 Graph-conditioned polygon-metric construction generator (Display module)
      151 Volumetric construction generation
      152 Generation of 3D geometric digital twin structure of construction
      153 Generation of 2D geometric digital twin structure of floor layers
   16 Graphical user interface
      161 Input polygon graph
      162 Output voxel graph
   17 Image recognition module
      171 Digital image (10)
   18 Data aggregation module
   19 Geocoding module
      191 CatNet module
2 Sensory (input devices and sensors)
   21 loT Sensory devices
3 Real-world Asset or Object
   31 Physical Asset
   32 Intangible Asset
   33 Living Object
      331 Human Being
      332 Animal
   34 Subsystems of the Real-world Asset or Object
      341, 342, 343,..., 34i Subsystems 1,...,i
   35 Subsystems and Components of the Ecosystem
      351, 352, 353,..., 35i Subsystems 1,...,i
4 Digital Risk Twin (autonomous)
   41 Digital Intelligence Layer
      411 Machine Learning
      412 Neural Network
   42 Property Parameters of Real-World Asset or Object
   43 Status Parameters of Real-World Asset or Object
      431 Structural Status Parameters
      432 Operational Status Parameters
      433 Environmental Status Parameters
   44 Data Structures Representing States of Each of the Plurality of Subsystems of the Real-World Asset or Object
   45 Digital Risk Twin
      451 Simulation
      452 Synchronization
      453 Twin Linking: Sensory/Measuring/Data Acquisition
   46 Digital Ecosystem Replica Layer
      461, 462, 463,..., 46i Virtual Subsystems of Twinned Ecosystem
   47 Digital Twin
      471 Simulation
      472 Synchronization
      473 Twin Linking: Sensory/Measuring/Data Acquisition
   48 Digital Asset/Object Replica Layer
      481, 482, 483,..., 48i Virtual Subsystems of Twinned Real-World Asset/Object
5 Ecosystem - Environment - Interaction between Real-world Assets/Objects
6 Data Transmission Network / Cloud structure

## Claims

1. Method for automated standardized location digital twins of physical constructions factoring in dynamic data and measuring parameters at different construction levels and generating standardized geo-encoding output, the dynamic data and measuring parameters at least comprise aerial digital imagery of a geographic area, geo location parameter values for locations in the geographic area and/or construction parameter values and/or measurement-based exposure parameter values and/or protection parameter values, comprising
capturing and displaying a digital imagery of a geographic area including a location of a physical construction of interest on a display of a user interface, wherein at least some of the geo location parameters are extracted from the image data by image recognition, the geo location parameters being technically measurable parameters indicating at least a latitude, longitude, elevation, surface area and/or soil conditions of the sub area and/or the property asset of interest,
identifying a sub-area by indicating the construction identification by setting polygon-shaped boundaries around the physical construction at the geographic area to generate a digital 2-dimensional construction lay-out on the digital imagery, wherein assembling the digital 2-dimensional construction lay-out comprises assigning one or more floor levels providing a 3-dimensional volumetric construction lay-out on the digital imagery,
generating a digital, polygon-based voxel layout providing the 3-dimensional representation of the digital 2-dimensional construction lay-out by encoding irregular voxel grids with non-uniform space partitioning, wherein the digital input imagery and the assembled polygon-based voxel layout is bridged by a pointer-based cross-modal module using a generative adversarial layout network and graphical neural network for passing messages between the digital input imagery and the assembled polygon-based voxel layout, and wherein the polygon-based voxel layout combines voxel-based and imagery-based layouts by encoding voxels into polygon-shaped graph nodes,
merging the digital imagery of the geographic area with a 2-dimensional geographic or topographic digital event foot-print of a selected natural catastrophic event,
assembling the digital 2-dimensional construction lay-out by graphically assigning hierarchic-structured levels comprising at least complexes and/or buildings and/or compartments via the graphical user interface,
extending the digital 2-dimensional construction lay-out by graphically assigning at least physical construction characteristic parameters and/or fire protection parameters and/or fire detection parameters and/or water source parameters and/or hazard control and protection parameters, and
generating a location digital twin based on the digital imagery and the combined digital 2-dimensional construction having a standardized output for the construction based on the dynamic data and measuring parameter values.

2. Method for automated standardized location digital twins of physical constructions according to claim 1, further assembling the digital 2-dimensional construction lay-out by graphically assigning one or more floor levels providing a 3-dimensional volumetric construction lay-out on the digital imagery.

3. Method for automated standardized location digital twins of physical constructions according to one of the claims 1 or 2, further generating the standardized location digital twin output by a predefined location digital twin format, the format being interchangeable for all possible location digital twins generated.

4. Method for automated standardized location digital twins of physical constructions according to one of the claims 1 to 3, further assigning via the user interface constructions and/or specifiable locations of third party constructions and exposure measurands.

5. Method for automated standardized location digital twins of physical constructions according to one of the claims 1 to 4, further assigning fire protection rating values of partition walls.

6. Method for automated standardized location digital twins of physical constructions according to one of the claims 1 to 5, wherein the construction lay-out is at least partially auto-populated by a hazard exposure value or hazard protection value.

7. Method for automated standardized location digital twins of physical constructions according to one of the claims 1 to 6, wherein loss scenarios are automatically provided where parameter values are assignable at construction level and/or parameter values are auto-allocated per building of a complex or construction pro-rata and/or parameter values are automatically updated based on the dynamic input data.

8. Method for automated standardized location digital twins of physical constructions according to one of the claims 1 to 7, wherein based on the dynamic data and measuring parameters and the generated location digital twin critical equipment and/or critical process flows are automatically indicated on the construction lay-out.

9. Method for automated standardized location digital twins of physical constructions according to claim 8, wherein the loss scenarios are indicated dynamically on the digital imagery and construction lay-out.

10. Method for automated standardized location digital twins of physical constructions according to one of the claims 1 to 9, wherein the location digital twin is indicated as an aerial overview of the geographic area including the sub-area around the physical property asset at the location of interest and the asset risk parameters.

11. Method for automated standardized location digital twins of physical constructions according to one of the claims 1 to 10, wherein each location digital twin of a physical property asset includes at least a standardized set of asset risk parameters including geo location parameters and measurement-based risk relevant data.

12. Method for automated standardized location digital twins of physical constructions according to one of the claims 1 to 11, wherein structural characteristics of the property asset are extracted from the image data by image recognition and visualized in the image.

13. Method for automated standardized location digital twins of physical constructions according to one of the claims 1 to 12, wherein image data of the geographic area, the geo location parameters for locations in the geographic area and the measurement-based risk relevant data for locations in the geographic area are provided by a data base and/or by an application programming interface from an external data platform or processing tool.

14. Method for automated standardized location digital twins of physical constructions according to one of the claims 1 to 13, wherein the asset risk parameters of the digital twin are augmented by user input via the user interface, wherein the user input comprises additional geo location parameters, additional measurement-based risk relevant data and/or property-specific information data about the property asset of interest.

15. Method for automated standardized location digital twins of physical constructions according to one of the claims 1 to 14, wherein the asset risk parameters are presented as a location score card for the measurement-based risk relevant data of the property asset of interest.

16. Method for automated standardized location digital twins of physical constructions according to one of the claims 1 to 15, wherein the displayed sub-area includes at least one property asset in form of a building schematically indicated by structural characteristics extracted from the image data by an image recognition algorithm.

17. Method for automated standardized location digital twins of physical constructions according to one of the claims 1 to 16, wherein geocoding is applied to the sub-areas and/or the property asset of interest identified in the sub area to provide geographic coordinates as geo location parameters of the sub area or the property asset.

18. Digital platform for automated standardized location digital twins of physical constructions factoring in dynamic data and measuring parameters at different construction levels and generating standardized geo-encoding output, the dynamic data and measuring parameters at least comprise aerial digital imagery of a geographic area, geo location parameter values for locations in the geographic area and/or construction parameter values and/or measurement-based exposure parameter values and/or protection parameter values, **characterized**
**in that** a digital imagery of a geographic area including a location of a physical construction of interest is captured and displayed on a display of a user interface, wherein at least some of the geo location parameters are extracted from the image data by image recognition, the geo location parameters being technically measurable parameters indicating at least a latitude, longitude, elevation, surface area and/or soil conditions of the sub area and/or the property asset of interest,
**in that** a sub-area is identified by indicating the construction identification by setting polygon-shaped boundaries around the physical construction at the geographic area to generate a digital 2-dimensional construction lay-out on the digital imagery, wherein assembling the digital 2-dimensional construction lay-out comprises assigning one or more floor levels providing a 3-dimensional volumetric construction lay-out on the digital imagery,
**in that** a digital, polygon-based voxel layout is generated providing the 3-dimensional representation of the digital 2-dimensional construction lay-out by encoding irregular voxel grids with non-uniform space partitioning, wherein the digital input imagery and the assembled polygon-based voxel layout is bridged by a pointer-based cross-modal module using a generative adversarial layout network and graphical neural network for passing messages between the digital input imagery and the assembled polygon-based voxel layout, and wherein the polygon-based voxel layout combines voxel-based and imagery-based layouts by encoding voxels into polygon-shaped graph nodes,
**in that** the digital imagery of the geographic area is merged with a 2-dimensional geographic or topographic digital event foot-print of a selected natural catastrophic event,
**in that** the digital 2-dimensional construction lay-out is assembled by graphically assigning hierarchic-structured levels comprising at least complexes and/or buildings and/or compartments via the graphical user interface,
**in that** the digital 2-dimensional construction lay-out is extended by graphically assigning at least physical construction characteristic parameters and/or fire protection parameters and/or fire detection parameters and/or water source parameters and/or hazard control and protection parameters, and
**in that** a location digital twin is generated based on the digital imagery and the combined digital 2-dimensional construction having a standardized output for the construction based on the dynamic data and measuring parameter values.

19. Digital platform for automated risk analysis according to claim 18, comprising at least a persistence storage (11) having at least one data-structure for capturing technical parameters and/or user-specific parameters, wherein the technical parameters comprise image data of a plurality of geographic areas, geo location parameters for locations in the geographic areas and/or measurement-based risk relevant data for locations in the geographic areas, and wherein the user-specific parameters comprise property-specific information data about the property asset of interest.

20. Digital platform for automated risk analysis according to claim 18 or 19, wherein the data processing engine (12) comprises a data receiving module (14), a display module (15) and a user interface module (16), wherein the data receiving module (14) is configured to receive image data of a geographic area for display by the display module, and the user interface module (16) is configured to receive user input defining a boundary around the physical property asset at the location of interest for display by the display module (15).

21. Digital platform for automated risk analysis according to one of claims 18 to 20, wherein the data processing engine (12) comprises an image recognition module (17) configured to recognize a property asset in the sub-area and display structural characteristics of the property asset.

22. Digital platform for automated risk analysis according to one of claims 18 to 21, wherein the data processing engine (12) comprises an aggregation module (18) configured to aggregate the image data of a geographic area, geo location parameters for locations in the sub-area and measurement-based risk relevant data for locations in the sub-area to generate the location digital twin for a property asset of interest in the sub-area.

## Patentansprüche

1. Verfahren für automatisierte standardisierte digitale Standortszwillinge von physischen Konstruktionen unter Berücksichtigung von dynamischen Daten und Messparametern auf verschiedenen Konstruktionsebenen und zur Erzeugung einer standardisierten Geokodierungsausgabe, wobei die dynamischen Daten und Messparameter mindestens digitale Luftbilder eines geographischen Gebiets, Geolokalisierungsparameterwerte für Standorte im geographischen Gebiet und/oder Konstruktionsparameterwerte und/oder messungsbasierte Expositionsparameterwerte und/oder Schutzparameterwerte umfassen, umfassend
Erfassen und Anzeigen eines digitalen Bildes eines geographischen Gebiets, das einen Standort einer physischen Konstruktion von Interesse beinhaltet, auf einer Anzeige einer Benutzerschnittstelle, wobei mindestens einige der Geolokalisierungsparameter aus den Bilddaten durch Bilderkennung extrahiert werden, wobei die Geolokalisierungsparameter technisch messbare Parameter sind, die mindestens eine geographische Breite, Länge, Höhe, Fläche und/oder Bodenbeschaffenheit des Teilgebiets und/oder des Vermögenswerts von Interesse anzeigen,
Identifizieren eines Teilgebiets durch Angabe der Konstruktionsidentifikation durch Setzen von polygonförmigen Grenzen um die physische Konstruktion im geographischen Gebiet, um ein digitales 2-dimensionales Konstruktionslayout auf dem digitalen Bildmaterial zu erzeugen, wobei das Zusammensetzen des digitalen 2-dimensionalen Konstruktionslayouts das Zuweisen einer oder mehrerer Stockwerkebenen umfasst, die ein 3-dimensionales volumetrisches Konstruktionslayout auf dem digitalen Bildmaterial bereitstellen,
Erzeugen eines digitalen, polygonbasierten Voxel-Layouts, das die 3-dimensionale Darstellung des digitalen 2-dimensionalen Konstruktionslayouts liefert, indem unregelmäßige Voxel-Gitter mit ungleichmäßiger Raumaufteilung kodiert werden, wobei das digitale Eingabebild und das zusammengesetzte polygonbasierte Voxel-Layout durch ein zeigerbasiertes crossmodales Modul überbrückt werden, das ein generatives gegnerisches Layout-Netzwerk und ein grafisches neuronales Netzwerk verwendet, um Nachrichten zwischen dem digitalen Eingabebild und dem zusammengesetzten polygonbasierten Voxel-Layout weiterzuleiten, und wobei das polygonbasierte Voxel-Layout voxelbasierte und bildbasierte Layouts kombiniert, indem Voxel in polygonförmige Graphknoten kodiert werden,
Zusammenführen der digitalen Bilder des geographischen Gebiets mit einem 2-dimensionalen geographischen oder topographischen digitalen Ereignis-Fußabdruck eines ausgewählten Naturkatastrophenereignisses,
Zusammensetzen des digitalen 2-dimensionalen Konstruktionslayouts durch grafische Zuweisung hierarchisch strukturierter Ebenen, die mindestens Komplexe und/oder Gebäude und/oder Kompartimente umfassen, über die grafische Benutzeroberfläche,
Erweitern des digitalen 2-dimensionalen Konstruktionslayouts durch grafisches Zuweisen von mindestens physikalischen Konstruktionseigenschaftsparametern und/oder Brandschutzparametern und/oder Brandmeldeparametern und/oder Wasserquellenparametern und/oder Gefahrenkontroll- und Schutzparametern, und
Erzeugen eines digitalen Standortzwillings auf der Grundlage der digitalen Bilder und der kombinierten digitalen 2-dimensionalen Konstruktion mit einer standardisierten Ausgabe für die Konstruktion auf der Grundlage der dynamischen Daten und Messparameterwerte.

2. Verfahren für automatisierte standardisierte digitale Standortszwillinge von physischen Konstruktionen nach Anspruch 1, wobei das digitale 2-dimensionale Konstruktionslayout durch grafische Zuweisung einer oder mehrerer Stockwerkebenen zu einem 3-dimensionalen volumetrischen Konstruktionslayout auf dem digitalen Bildmaterial zusammengesetzt wird.

3. Verfahren für automatisierte standardisierte digitale Standortszwillinge von physischen Konstruktionen nach einem der Ansprüche 1 oder 2, wobei ferner die standardisierte digitale Standortszwillingsausgabe durch ein vordefiniertes digitales Zwillingsformat erzeugt wird, wobei das Format für alle möglichen erzeugten digitalen Standortszwillinge austauschbar ist.

4. Verfahren für automatisierte standardisierte digitale Standortszwillinge von physikalischen Konstruktionen nach einem der Ansprüche 1 bis 3, wobei ferner über die Benutzeroberfläche Konstruktionen und/oder spezifizierbare Standorte von Drittkonstruktionen und Expositionsmessgrößen zugewiesen werden.

5. Verfahren für automatisierte standardisierte digitale Standortszwillinge von physischen Bauwerken nach einem der Ansprüche 1 bis 4, wobei ferner Brandschutzwerten von Trennwänden zugewiesen werden.

6. Verfahren für automatisierte standardisierte digitale Standortszwillinge von physischen Bauwerken nach einem der Ansprüche 1 bis 5, wobei das Konstruktionslayout zumindest teilweise automatisch mit einem Gefährdungswert oder einem Gefahrenschutzwert gefüllt wird.

7. Verfahren für automatisierte standardisierte digitale Standortszwillinge von physischen Bauwerken nach einem der Ansprüche 1 bis 6, wobei Schadensszenarien automatisch bereitgestellt werden, bei denen die Parameterwerte auf Konstruktionsebene zugewiesen werden können und/oder die Parameterwerte automatisch pro Gebäude eines Komplexes oder einer Konstruktion anteilig zugewiesen werden und/oder die Parameterwerte automatisch auf der Grundlage der dynamischen Eingabedaten aktualisiert werden.

8. Verfahren für automatisierte standardisierte digitale Standortszwillinge von physischen Konstruktionen nach einem der Ansprüche 1 bis 7, wobei auf der Grundlage der dynamischen Daten und Messparameter und des generierten digitalen Standortzwillings kritische Ausrüstungen und/oder kritische Prozessflüsse automatisch auf dem Konstruktionslayout angezeigt werden.

9. Verfahren für automatisierte standardisierte digitale Standortszwillinge von physischen Konstruktionen nach Anspruch 8, wobei die Schadensszenarien dynamisch auf dem digitalen Bildmaterial und dem Konstruktionslayout angezeigt werden.

10. Verfahren für automatisierte standardisierte digitale Standortszwillinge von physischen Konstruktionen nach einem der Ansprüche 1 bis 9, wobei der digitale Standortszwilling als Luftbildübersicht des geographischen Gebiets einschließlich des Teilgebiets um den physischen Vermögenswert am Standort von Interesse und der Risikoparameter des Vermögenswerts angezeigt wird.

11. Verfahren für automatisierte standardisierte digitale Standortszwillinge von physischen Konstruktionen nach einem der Ansprüche 1 bis 10, wobei jeder digitale Standortszwilling eines physischen Vermögenswertes mindestens einen standardisierten Satz von Risikoparametern für den Vermögenswert beinhaltet, einschließlich Geolokalisierungsparameter und messungsbasierte risikorelevante Daten.

12. Verfahren für automatisierte standardisierte digitale Standortszwillinge von physischen Konstruktionen nach einem der Ansprüche 1 bis 11, wobei strukturelle Merkmale des Vermögenswerts aus den Bilddaten durch Bilderkennung extrahiert und im Bild visualisiert werden.

13. Verfahren für automatisierte standardisierte digitale Standortszwillinge von physischen Konstruktionen nach einem der Ansprüche 1 bis 12, wobei Bilddaten des geographischen Gebiets, die Geolokalisierungsparameter für Standorte im geographischen Gebiet und die messungsbasierten risikorelevanten Daten für Standorte im geographischen Gebiet durch eine Datenbank und/oder durch eine Anwendungsprogrammierschnittstelle von einer externen Datenplattform oder einem Verarbeitungswerkzeug bereitgestellt werden.

14. Verfahren für automatisierte standardisierte digitale Standortszwillinge von physischen Konstruktionen nach einem der Ansprüche 1 bis 13, wobei die Vermögensrisikoparameter des digitalen Zwillings durch Benutzereingaben über die Benutzerschnittstelle ergänzt werden, wobei die Benutzereingaben zusätzliche Geolokalisierungsparameter, zusätzliche messungsbasierte risikorelevante Daten und/oder objektspezifische Informationsdaten über den Vermögenswert von Interesse umfassen.

15. Verfahren für automatisierte standardisierte digitale Standortszwillinge von physischen Konstruktionen nach einem der Ansprüche 1 bis 14, wobei die Vermögensrisikoparameter als eine Standorts-Score-Karte für die messungsbasierten risikorelevanten Daten des Vermögenswertes von Interesse dargestellt werden.

16. Verfahren für automatisierte standardisierte digitale Standortszwillinge von physischen Konstruktionen nach einem der Ansprüche 1 bis 15, wobei das angezeigte Teilgebiet mindestens einen Vermögenswert in Form eines Gebäudes beinhaltet, das durch strukturelle Merkmale, die durch einen Bilderkennungsalgorithmus aus den Bilddaten extrahiert wurden, schematisch angezeigt wird.

17. Verfahren für automatisierte standardisierte digitale Standortszwillinge von physischen Konstruktionen nach einem der Ansprüche 1 bis 16, wobei die Geokodierung auf die in dem Teilgebiet identifizierten Teilgebiete und/oder den Vermögenswert von Interesse angewendet wird, um geographische Koordinaten als Geolokalisierungsparameter des Teilgebiets oder des Vermögenswertes bereitzustellen.

18. Digitale Plattform für automatisierte standardisierte digitale Standortszwillinge von physischen Konstruktionen unter Berücksichtigung von dynamischen Daten und Messparametern auf verschiedenen Konstruktionsebenen und zur Erzeugung einer standardisierten Geokodierungsausgabe, wobei die dynamischen Daten und Messparameter mindestens digitale Luftbilder eines geographischen Gebiets, Geolokalisierungsparameterwerte für Standorte in dem geographischen Gebiet und/oder Bauparameterwerte und/oder messungsbasierte Expositionsparameterwerte und/oder Schutzparameterwerte umfassen, **dadurch gekennzeichnet,**
**dass** ein digitales Bild eines geographischen Gebietes, das einen Standort einer physischen Konstruktion von Interesse beinhaltet, erfasst und auf einer Anzeige einer Benutzerschnittstelle angezeigt wird, wobei zumindest einige der Geolokalisierungsparameter aus den Bilddaten durch Bilderkennung extrahiert werden, wobei die Geolokalisierungsparameter technisch messbare Parameter sind, die zumindest eine geographische Breite, Länge, Höhe, Fläche und/oder Bodenbeschaffenheit des Teilgebietes und/oder des Vermögenswertes von Interesse anzeigen,
**dass** ein Teilgebiet durch Angabe der Konstruktionsidentifikation identifiziert wird, indem polygonförmige Grenzen um die physische Konstruktion im geographischen Gebiet gesetzt werden, um ein digitales 2-dimensionales Konstruktionslayout auf dem digitalen Bildmaterial zu erzeugen, wobei das Zusammensetzen des digitalen 2-dimensionalen Konstruktionslayouts die Zuweisung einer oder mehrerer Stockwerkebenen umfasst, die ein 3-dimensionales volumetrisches Konstruktionslayout auf dem digitalen Bildmaterial bereitstellen,
**dass** ein digitales, polygonbasiertes Voxel-Layout erzeugt wird, das die 3-dimensionale Darstellung des digitalen 2-dimensionalen Konstruktionslayouts durch Kodierung unregelmäßiger Voxel-Gitter mit ungleichmäßiger Raumaufteilung liefert, wobei das digitale Eingabebild und das zusammengesetzte polygonbasierte Voxel-Layout durch ein zeigerbasiertes crossmodales Modul überbrückt werden, das ein generatives gegnerisches Layout-Netzwerk und ein grafisches neuronales Netzwerk zur Weitergabe von Nachrichten zwischen dem digitalen Eingabebild und dem zusammengesetzten polygonbasierten Voxel-Layout verwendet, und wobei das polygonbasierte Voxel-Layout voxelbasierte und bildbasierte Layouts durch Kodierung von Voxeln in polygonförmige Graphknoten kombiniert,
indem das digitale Bildmaterial des geografischen Gebiets mit einem 2-dimensionalen geografischen oder topografischen digitalen Ereignis-Fußabdruck eines ausgewählten Naturkatastrophenereignisses zusammengeführt wird,
**dass** das digitale 2-dimensionale Konstruktionslayout durch grafische Zuweisung von hierarchisch strukturierten Ebenen, die mindestens Komplexe und/oder Gebäude und/oder Kompartimente umfassen, über die grafische Benutzeroberfläche zusammengestellt wird,
**dass** das digitale 2-dimensionale Konstruktionslayout durch die grafische Zuweisung von mindestens physikalischen Konstruktionsmerkmalen und/oder Brandschutzparametern und/oder Brandmeldeparametern und/oder Wasserquellenparametern und/oder Gefahrenkontroll- und Schutzparametern erweitert wird, und
**dass** ein digitaler Standortszwilling auf der Grundlage der digitalen Bilder und der kombinierten digitalen 2-dimensionalen Konstruktion mit einer standardisierten Ausgabe für die Konstruktion auf der Grundlage der dynamischen Daten und Messparameterwerte erzeugt wird.

19. Digitale Plattform zur automatisierten Risikoanalyse nach Anspruch 18, umfassend mindestens einen Persistenzspeicher (11) mit mindestens einer Datenstruktur zur Erfassung von technischen Parametern und/oder benutzerspezifischen Parametern, wobei die technischen Parameter Bilddaten einer Vielzahl von geographischen Gebieten, Geolokalisierungsparameter für Standorte in den geographischen Gebieten und/oder messungsbasierte risikorelevante Daten für Standorte in den geographischen Gebieten umfassen, und wobei die benutzerspezifischen Parameter immobilienspezifische Informationsdaten über den Vermögenswert von Interesse umfassen.

20. Digitale Plattform zur automatisierte Risikoanalyse nach Anspruch 18 oder 19, wobei die Datenverarbeitungsmaschine (12) ein Datenempfangsmodul (14), ein Anzeigemodul (15) und ein Benutzerschnittstellenmodul (16) umfasst, wobei das Datenempfangsmodul (14) so konfiguriert ist, dass es Bilddaten eines geografischen Gebiets zur Anzeige durch das Anzeigemodul empfängt, und das Benutzerschnittstellenmodul (16) so konfiguriert ist, dass es Benutzereingaben empfängt, die eine Grenze um den physischen Vermögenswert an dem Standort von Interesse zur Anzeige durch das Anzeigemodul (15) definieren.

21. Digitale Plattform zur automatisierten Risikoanalyse nach einem der Ansprüche 18 bis 20, wobei die Datenverarbeitungsmaschine (12) ein Bilderkennungsmodul (17) umfasst, das so konfiguriert ist, dass es einen Vermögenswert in dem Teilgebiet erkennt und strukturelle Merkmale des Vermögenswertes anzeigt.

22. Digitale Plattform zur automatisiertes Risikoanalyse nach einem der Ansprüche 18 bis 21, wobei die Datenverarbeitungsmaschine (12) ein Aggregationsmodul (18) umfasst, das so konfiguriert ist, dass es die Bilddaten eines geografischen Gebiets, Geostandortparameter für Standorte im Teilgebiet und messungsbasierte risikorelevante Daten für Standorte im Teilgebiet aggregiert, um den digitalen Standortzwilling für einen Vermögenswert von Interesse im Teilgebiet zu erzeugen.

## Revendications

1. Procédé destiné à la localisation standardisée automatisée de jumeaux numériques de localisation standardisés de constructions physiques prenant en compte des données dynamiques et des paramètres de mesure à différents niveaux de construction et générant un résultat de géocodage standardisé, les données dynamiques et les paramètres de mesure comprennent au moins une imagerie numérique aérienne d'une zone géographique, des valeurs de paramètres de géolocalisation pour des emplacements dans la zone géographique et/ou des valeurs de paramètres de construction et/ou des valeurs de paramètres d'exposition basés sur des mesures et/ou des valeurs de paramètres de protection, comprenant
la capture et l'affichage d'une imagerie numérique d'une zone géographique comportant un emplacement d'une construction physique d'intérêt sur un écran d'une interface utilisateur, dans lequel au moins certains des paramètres de géolocalisation sont extraits des données d'image par reconnaissance d'image, les paramètres de géolocalisation étant des paramètres techniquement mesurables indiquant au moins une latitude, une longitude, une altitude, une superficie et/ou des conditions du sol de la sous-zone et/ou de l'actif immobilier d'intérêt,
l'identification d'une sous-zone par l'indication de l'identification de construction par la définition de limites polygonales autour de la construction physique au niveau de la zone géographique pour générer un agencement de construction numérique bidimensionnel sur l'imagerie numérique, dans lequel l'assemblage de l'agencement de construction numérique bidimensionnel comprend l'attribution d'un ou plusieurs niveaux d'étage fournissant un agencement de construction volumétrique tridimensionnel sur l'imagerie numérique,
la génération d'un agencement numérique de voxels basés sur des polygones fournissant la représentation tridimensionnelle de l'agencement de construction numérique bidimensionnel par le codage des grilles de voxels irrégulières avec un partitionnement non uniforme de l'espace, dans lequel l'imagerie numérique d'entrée et l'agencement de voxels basés sur des polygones assemblés est reliée par un module intermodal sur basé sur un pointeur à l'aide d'un réseau d'agencement contradictoire génératif et d'un réseau neuronal graphique pour la transmission de messages entre l'imagerie d'entrée numérique et l'agencement de voxels basés sur des polygones assemblés, et dans lequel l'agencement de voxels basés sur des polygones combine des agencements basés sur des voxels et basé sur une imagerie par le codage de voxels dans des nœuds graphiques en forme de polygones,
la fusion de l'imagerie numérique de la zone géographique avec une empreinte d'évènement numérique géographique ou topographique bidimensionnelle d'un événement catastrophique naturel sélectionné,
l'assemblage de l'agencement de construction numérique bidimensionnel par l'attribution de manière graphique de niveaux structurés en hiérarchies comprenant au moins des complexes et/ou des bâtiments et/ou des compartiments par le biais de l'interface utilisateur graphique.
l'extension de l'agencement de construction numérique bidimensionnel par l'attribution de manière graphique d'au moins des paramètres caractéristiques de construction physique et/ou des paramètres de protection incendie et/ou des paramètres de détection incendie et/ou des paramètres de source d'eau et/ou des paramètres de contrôle et de protection contre les risques.
la génération d'un jumeau numérique de localisation basé sur l'imagerie numérique et de la construction numérique bidimensionnelle combinée ayant une sortie standardisée pour la construction basée sur des données dynamiques et des valeurs des paramètres de mesure.

2. Procédé de localisation standardisée automatisée de jumeaux numériques de constructions physiques selon la revendication 1, en outre l'assemblage de l'agencement de construction numérique bidimensionnel par l'attribution graphique d'un ou plusieurs niveaux d'étage fournissant un agencement de construction volumétrique tridimensionnel sur l'imagerie numérique.

3. Procédé de localisation standardisée automatisée de jumeaux numériques de constructions physiques selon l'une des revendications 1 ou 2, générant en outre la sortie du jumeau numérique de localisation standardisé par un format de jumeau numérique de localisation prédéfini, le format étant interchangeable pour tous les jumeaux numériques de localisation possibles générés.

4. Procédé de localisation standardisée automatisée de jumeaux numériques de constructions physiques selon l'une des revendications 1 à 3, attribuant en outre, par le biais de l'interface utilisateur, des constructions et/ou des emplacements spécifiables de constructions tierces et des mesurandes d'exposition.

5. Procédé de localisation standardisée automatisée de jumeaux numériques de constructions physiques selon l'une des revendications 1 à 4, l'attribution en outre de valeurs d'indice de protection incendie de murs de séparation.

6. Procédé de localisation standardisée automatisée de jumeaux numériques de constructions physiques selon l'une des revendications 1 à 5, dans lequel l'agencement de la construction est au moins partiellement générée automatiquement par une valeur d'exposition au danger ou une valeur de protection contre le danger.

7. Procédé de jumeaux numériques de localisation standardisés automatisés de constructions physiques selon l'une des revendications 1 à 6, dans lequel des scénarios de perte sont automatiquement fournis dans lesquels des valeurs de paramètres sont attribuables au niveau de la construction et/ou des valeurs de paramètres sont attribuées automatiquement par bâtiment d'un complexe ou au prorata de la construction et/ou des valeurs de paramètres sont automatiquement mises à jour basées sur des données d'entrée dynamiques.

8. Procédé de localisation standardisée automatisée de jumeaux numériques de constructions physiques selon l'une des revendications 1 à 7, dans lequel, basé sur des données dynamiques et des paramètres de mesure et du jumeau numérique de localisation généré, les équipements critiques et/ou les flux de processus critiques sont automatiquement indiqués sur l'agencement de construction.

9. Procédé de localisation standardisée automatisée de jumeaux numériques de constructions physiques selon la revendication 8, dans lequel les scénarios de pertes sont indiqués de manière dynamique sur l'imagerie numérique et l'agencement de construction.

10. Procédé de localisation standardisée automatisée de jumeaux numériques de constructions physiques selon l'une des revendications 1 à 9, dans lequel le jumeau numérique de localisation est une vue aérienne de la zone géographique, comportant la sous-zone autour de l'actif immobilier physique au niveau de l'emplacement d'intérêt et les paramètres de risque du bien.

11. Procédé de localisation standardisée automatisée de jumeaux numériques de constructions physiques selon l'une des revendications 1 à 10, dans lequel chaque jumeau numérique de localisation d'un actif immobilier physique comporte au moins un ensemble standardisé de paramètres de risque du bien comportant des paramètres de géolocalisation et des données pertinentes de risque basées sur des mesures.

12. Procédé de localisation standardisée automatisée de jumeaux numériques de constructions physiques selon l'une des revendications 1 à 11, dans lequel les caractéristiques structurelles de l'actif immobilier sont extraites des données d'image par reconnaissance d'image et visualisées dans l'image.

13. Procédé de localisation standardisée automatisée de jumeaux numériques de constructions physiques selon l'une des revendications 1 à 12, dans lequel des données d'image de la zone géographique, les paramètres de géolocalisation des emplacements dans la zone géographique et les données pertinentes de risque basées sur des mesures pour des emplacements dans la zone géographique sont fournies par une base de données et/ou par une interface de programmation d'application provenant d'une plateforme de données ou d'un outil de traitement externe.

14. Procédé de localisation standardisée automatisée de jumeaux numériques de constructions physiques selon l'une des revendications 1 à 13, dans lequel les paramètres de risque de bien du jumeau numérique sont augmentés par une entrée utilisateur par le biais de l'interface utilisateur, dans lequel l'entrée utilisateur comprend des paramètres de géolocalisation supplémentaires, des données pertinentes de risque basées sur des mesures supplémentaires et/ou des données d'informations spécifiques à la propriété à propos de l'actif immobilier d'intérêt.

15. Procédé de localisation standardisée automatisée de jumeaux numériques de constructions physiques selon l'une des revendications 1 à 14, dans lequel les paramètres de risque du bien sont présentés sous forme de tableau de bord de localisation pour les données pertinentes de risque basées sur des mesures de l'actif immobilier d'intérêt.

16. Procédé de localisation standardisée automatisée de jumeaux numériques de constructions physiques selon l'une des revendications 1 à 15, dans lequel la sous-zone affichée comporte au moins un actif immobilier sous forme d'un bâtiment schématiquement représenté par des caractéristiques structurelles extraites des données d'image par un algorithme de reconnaissance d'images.

17. Procédé de localisation standardisée automatisée de jumeaux numériques de constructions physiques selon l'une des revendications 1 à 16, dans lequel le géocodage est appliqué aux sous-zones et/ou à l'actif immobilier d'intérêt identifiés dans la sous-zone pour fournir des coordonnées géographiques comme paramètres de géolocalisation de la sous-zone ou de l'actif immobilier.

18. Plateforme numérique de localisation standardisée automatisée de jumeaux numériques de localisation standardisés de constructions physiques prenant en compte des données dynamiques et des paramètres de mesure à différents niveaux de construction et générant un résultat de géocodage standardisé, les données dynamiques et les paramètres de mesure comprennent au moins une imagerie numérique aérienne d'une zone géographique, des valeurs de paramètres de géolocalisation pour des emplacements dans la zone géographique et/ou des valeurs de paramètres de construction et/ou des valeurs de paramètres d'exposition basées sur des mesures et/ou des valeurs de paramètres de protection, **caractérisée**
**en ce que** la capture et l'affichage d'une imagerie numérique d'une zone géographique comportant un emplacement d'une construction physique d'intérêt est capturée et affichée sur un écran d'une interface utilisateur, dans laquelle au moins certains des paramètres de géolocalisation sont extraits des données d'image par reconnaissance d'image, les paramètres de géolocalisation étant des paramètres techniquement mesurables indiquant au moins une latitude, une longitude, une altitude, une superficie et/ou des conditions du sol de la sous-zone et/ou de l'actif immobilier d'intérêt,
**en ce qu'**une sous-zone est identifiée par l'indication de l'identification de construction par la définition de limites polygonales autour de la construction physique au niveau de la zone géographique pour générer un agencement de construction numérique bidimensionnel sur l'imagerie numérique, dans laquelle l'assemblage de l'agencement de construction numérique bidimensionnel comprend l'attribution d'un ou plusieurs niveaux d'étage fournissant un agencement de construction volumétrique tridimensionnel sur l'imagerie numérique,
**en ce qu'**un agencement numérique de voxels basés sur des de polygones est généré par la fourniture de la représentation tridimensionnelle de l'agencement de construction numérique bidimensionnel par le codage des grilles de voxels irrégulières avec un partitionnement non uniforme de l'espace, dans lequel l'imagerie numérique d'entrée et l'agencement de voxels basés sur des polygones assemblés est reliée par un module intermodal basé sur un pointeur à l'aide d'un réseau d'agencement contradictoire génératif et d'un réseau neuronal graphique pour la transmission de messages entre l'imagerie d'entrée numérique et l'agencement de voxels basés sur des polygones assemblés, et dans lequel l'agencement de voxels sur base de polygones combine des agencements basés sur des voxels et basés sur l'imagerie par le codage de voxels dans des noeuds graphiques en forme de polygones,
**en ce que** l'imagerie numérique de la zone géographique est fusionnée avec une empreinte d'évènement numérique géographique ou topographique bidimensionnelle d'un événement catastrophique naturel sélectionné,
**en ce que** l'agencement de construction numérique bidimensionnel est assemblé par l'attribution de manière graphique de niveaux structurés en hiérarchies comprenant au moins des complexes et/ou des bâtiments et/ou des compartiments via l'interface utilisateur graphique.
**en ce que** l'agencement de construction numérique bidimensionnel est étendu par l'attribution de manière graphique d'au moins des paramètres caractéristiques de construction physique et/ou des paramètres de protection incendie et/ou des paramètres de détection incendie et/ou des paramètres de source d'eau et/ou des paramètres de contrôle et de protection contre les risques.
**en ce qu'**un jumeau numérique de localisation est généré basé sur l'imagerie numérique et de la construction numérique bidimensionnelle combinée ayant une sortie standardisée pour la construction basée sur des données dynamiques et des valeurs des paramètres de mesure.

19. Plateforme numérique d'analyse automatisée de risques selon la revendication 18, comprenant au moins une mémoire de persistance (11) dotée d'au moins une structure de données pour la capture de paramètres techniques et/ou de paramètres spécifiques à l'utilisateur, dans laquelle les paramètres techniques comprennent des données d'image de plusieurs zones géographiques, des paramètres de géolocalisation pour des emplacements et/ou des données pertinentes de risque basées sur des mesures pour des emplacements dans les zones géographiques, et dans laquelle les paramètres spécifiques à l'utilisateur comprennent des données d'informations spécifiques à la propriété concernant l'actif immobilier d'intérêt.

20. Plateforme numérique d'analyse automatisée des risques selon la revendication 18 ou 19, dans laquelle le moteur de traitement de données (12) comprend un module de réception de données (14), un module d'affichage (15) et un module d'interface utilisateur (16), dans laquelle le module de réception de données (14) est configuré pour recevoir des données d'image d'une zone géographique pour affichage par le module d'affichage, et le module d'interface utilisateur (16) est configuré pour recevoir les données utilisateur définissant une limite autour de l'actif immobilier physique à l'emplacement d'intérêt pour affichage par le module d'affichage (15).

21. Plateforme numérique d'analyse automatisée des risques selon l'une des revendications 18 à 20, dans laquelle le moteur de traitement de données (12) comprend un module de reconnaissance d'images (17) configuré pour reconnaître un actif immobilier dans la sous-zone et afficher des caractéristiques structurelles de l'actif immobilier.

22. Plateforme numérique d'analyse automatisée des risques selon l'une des revendications 18 à 21, dans laquelle le moteur de traitement de données (12) comprend un module d'agrégation (18) configuré pour agréger les données d'images d'une zone géographique, des paramètres de géolocalisation des emplacements dans la sous-zone et des données de risque basées sur des mesures pour les emplacements dans la sous-zone pour générer le jumeau numérique de localisation d'un actif immobilier d'intérêt dans la sous-zone.
